# EUROPÄISCHE PATENTSCHRIFT

(11) **EP 4 100 326 B1**
(45) Veröffentlichungstag und Bekanntmachung des Hinweises auf die Patenterteilung: **02.04.2025**
(21) Anmeldenummer: 21703243.2
(22) Anmeldetag: 02.02.2021
(51) Int. Cl.: B65B 3/00, B01L 1/02, B25J 21/00, B65B 31/02, B65B 55/02, C12M 1/12, G21F 7/005

(54) **VERFAHREN ZUM TRANSFERIEREN ZUMINDEST EINER FÜLLNADEL EINER ANZAHL VON FÜLLNADELN IN EINEN ASEPTISCHEN ISOLATOR**
METHOD FOR TRANSFERRING AT LEAST ONE FILLING NEEDLE OF A NUMBER OF FILLING NEEDLES INTO AN ASEPTIC ISOLATOR
PROCÉDÉ DE TRANSFERT D'AU MOINS UNE AIGUILLE DE REMPLISSAGE D'UN CERTAIN NOMBRE D'AIGUILLES DE REMPLISSAGE DANS UN ISOLATEUR ASEPTIQUE

(30) Priorität: 04.02.2020 DE 102020102765
(43) Veröffentlichungstag der Anmeldung: 14.12.2022
(60) Teilanmeldung: 24158132.1
(73) Patentinhaber: GRONINGER & CO. GMBH, 74564 Crailsheim (DE)
(72) Erfinder: MERZ, Armin, 73479 Ellwangen (DE); ENGELHARD, Roland, 91589 Aurach-Weinberg (DE); WEINMANN, Jens, 74564 Crailsheim (DE)
(74) Vertreter: Witte, Weller & Partner Patentanwälte mbB
(86) Internationale Anmeldenummer: PCT/EP2021/052443
(87) Internationale Veröffentlichungsnummer: WO 2021/156261

(56) Entgegenhaltungen:
- WO-A1-2018/024737
- US-A1- 2009 223 592
- US-A1- 2018 037 343

## Beschreibung

Die vorliegende Erfindung betrifft Verfahren zum Transferieren zumindest einer Füllnadel einer Anzahl von Füllnadeln in einen aseptischen Isolator. Des Weiteren betrifft die vorliegende Erfindung ein Transfersystem zum Transferieren zumindest einer Füllnadel einer Anzahl von Füllnadeln in einen aseptischen Isolator. Des Weiteren betrifft die vorliegende Erfindung ein Computerprogrammprodukt.

Die vorliegende Erfindung beschäftigt sich in erster Linie mit aseptischen Isolatoren, die vorzugsweise einen Füllbereich zum fluiden Befüllen von Objekten (z.B. Vials, Karpulen, Fläschchen, Spritzen und/oder dergleichen) mittels Füllnadeln aufweisen. Unter dem Begriff "Isolator" ist allgemein ein Behälter zu verstehen, der gegenüber dem umgebenden Arbeitsraum hermetisch und gasdicht abgeschlossen ist. Innerhalb eines Isolators kann eine definierte Atmosphäre zur Bearbeitung empfindlicher oder gefährlicher Produkte erzeugt werden.

In diesem Kontext werden Isolatoren üblicherweise in der biopharmazeutischen Prozesstechnik, beispielsweise als Teil einer Füllanlage mit mehreren Prozess- und Verarbeitungsstationen, verwendet, um eine hochreine oder sterile Umgebung zu schaffen und eine Kontamination durch Bakterien, Viren, Keime, Krankheitserreger und/oder dergleichen zu vermeiden.

Im Stand der Technik werden Isolatoren häufig bei der Endabfüllung eingesetzt, wobei ein Fluid mit Hilfe von Füllorganen (z.B. Füllnadeln, Injektionsdüsen, etc.) in ein Objekt überführt wird. Derartige Isolatoren weisen in der Regel einen oder mehrere Transferschleusen auf, mittels deren biopharmazeutische Utensilien, beispielsweise Füllorgane, Objekte und/oder fluide Kommunikationsmittel (z.B. Schläuche, Röhren, Leitungen, etc.), steril in den Isolator eingeführt werden können. Die biopharmazeutischen Utensilien werden z.B. mittels eines Beutelanschlusses dem Reinraum zugeführt.

Einen solchen Aufbau zeigt beispielsweise die Druckschrift EP 2 534 052 B1, welche allgemein ein Verfahren und ein System zum Befüllen eines Endbehälters mit für den Biopharmaziebereich vorgesehenen Fluiden in einer sterilen Umgebung betrifft. Dabei wird ein steriler Beutel, welcher sogenannte "interne Mittel und Organe", beispielsweise Füllorgane und fluide Kommunikationsmittel, enthält, mittels einer darin vorgesehenen Öffnung, die komplementär zu einer Tür eines Reinraums ist, mit dem Reinraum verbunden. Anschließend werden die internen Mittel und Organe von dem Beutel in den Reinraum transferiert und einem Endbehälter zugeordnet.

Üblicherweise erfolgt der Transfer von Füllorganen, fluiden Kommunikationsmitteln und/oder Objekten in einen Reinraum und die anschließende Weiterverarbeitung darin mittels Handschuhdurchführungen. Derartige Handschuhdurchführungen ermöglichen den isolierten Eingriff in den Isolator, ohne die darin enthaltenen biopharmazeutischen Produkte, produktberührenden Teile und/oder Materialien zu verunreinigen. Die Handschuhdurchführungen grenzen oftmals direkt an die Transferschleuse bzw. den Medienanschluss an, so dass die Füllnadeln und/oder Objekte händisch in den Isolator eingesetzt oder aus diesem entnommen werden können.

Diese "manuelle" Handhabung ist jedoch enorm zeitintensiv. Des Weiteren können Handschuhdurchführungen, welche in der Praxis aus Gummi- oder Kunststoff, insbesondere Butyl, bestehen, beim Greifen von Füllorganen, insbesondere Füllnadeln, Spritzen mit Kanülen oder dergleichen, schnell beschädigt werden. Handschuheingriffe stellen somit auch ein erhöhtes Kontaminations- und/oder Sicherheitsrisiko infolge von Leckagen dar. Darüber hinaus kann ein manuelles Bearbeiten bzw. Manipulieren von Füllnadeln, insbesondere im Hinblick auf das Befüllen von Objekten, den hohen Ansprüchen an die Dosiergenauigkeit und reproduzierbare Erzeugnisse pharmazeutischer oder kosmetischer Erzeugnisse nicht genügen.

Vor diesem Hintergrund wird die Handhabung derartiger Füllorgane innerhalb von Isolatoren zunehmend von Robotern übernommen. Hersteller entwickeln mittlerweile Isolatoren, die menschliche Eingriffe während eines Füllvorgangs in einer Füllstation zunehmend reduzieren, um das Risiko einer Kontamination zu schmälern.

Beispielsweise beschäftigt sich die Druckschrift WO 2018/025092 A1 mit einem Verfahren und einem System zum aseptischen Befüllen von pharmazeutischen Behältern mit pharmazeutischer Flüssigkeit. Das Verfahren und das System basieren auf einer aseptisch abdichtbaren Kammer, die eine Trennwand aufweist, an der vorverdichtete pharmazeutische Quell- und Aufnahmebehälter aseptisch montiert sind. Innerhalb der Kammer sind ein Roboterarm, ein Spritzenträger mit darin vorgesehenen Spritzen sowie eine Sterilisationsanlage, die einen aseptischen Zustand in der Kammer herstellt, angeordnet. Der Roboterarm ist in der Lage, eine einzelne Spritze der in dem Nadelhalter vorgesehenen Anzahl von Spritzen zu ergreifen und zu steuern, um pharmazeutische Produkte in die Behälter zu injizieren und/oder aus diesen zu extrahieren, indem er den Verschluss eines Behälters mit der Nadel der Spritze durchsticht.

Die Druckschrift WO 2018/025092 A1 zeigt somit ein robotergestütztes Füllsystem, das mittels eines Robotergreifers eine Anzahl von Spritzen einzeln innerhalb einer aseptisch verschließbaren Kammer zwischen einem Spritzenträger und einer Füllposition bewegt. Jede Spritze ist dabei mit einer Spritzenkappe versehen und zu Beginn des Verfahrens bereits in dem Spritzenträger angeordnet. Die Spritzenkappe wird vor jedem Füll- bzw. Extraktionsvorgang von der Spritze entfernt und nach dem Gebrauch der Spritze wieder aufgesetzt. Die Sterilisationsanlage stellt den aseptischen Zustand zudem erst dann her, wenn die Spritzen bereits innerhalb der Kammer vorgesehen sind.

Des Weiteren betrifft beispielsweise die Druckschrift US 2009/0223592 A1 robotergestützte Füllsysteme und -verfahren zum Füllen von Behältern mit einem Produkt, insbesondere einem pharmazeutischen, flüssigen oder toxischen Produkt. Innerhalb der Isolatorkammer ist ein Roboter-Haltearm zum Halten und Transportieren eines mit Endbehältern versehenen Halters angeordnet. Der Isolator weist zumindest einen Port auf, der ein aseptisches Einbringen von Behältern in das Innere des Isolators ermöglicht. Des Weiteren ist ein Roboter-Füllarm innerhalb des Isolators angeordnet, der mit einem Füllschlauch ausgestattet ist und mittels Muster- bzw. Positionserkennung das Befüllen der Behälter durchführt. Das Füllsystem weist komplementäre Handschuhdurchführungen für manuelle Arbeiten auf.

Durch keines der bekannten Systeme und Verfahren wird dem eingangs erwähnten Problem hinsichtlich des manuellen Transfers von Füllnadeln in einen aseptischen Isolator abgeholfen. Bei dem aus der WO 2018/025092 A1 bekannten System sind die Spritzen bereits vor dem Herstellen des aseptischen Zustands in der abdichtbaren Kammer angeordnet. In der vorstehend erwähnten US 2009/0223592 A1 hingegen wird gänzlich auf das Transferieren von Füllnadeln in den Isolator verzichtet. Des Weiteren zeigt die Druckschrift WO 2018/024737 A1 eine Maschine zum Befüllen und Verpacken von Flaschen, Kartuschen, Spritzen und dergleichen, wobei die Maschine eine Wand aufweist, die eine Arbeitskammer begrenzt, in der mindestens ein Handhabungsarm angeordnet ist, der im Wesentlichen gegenüber von zumindest einer Station angeordnet ist, die außerhalb der Arbeitskammer zur Verarbeitung von zumindest einem Behälter angeordnet ist. Zumindest ein Zwischenelement weist an zumindest einem Abschnitt davon zumindest ein Kopplungselement auf, das dazu ausgebildet ist, alternativ mit der Station und dem Handhabungsarm verbunden werden zu können, wobei das Zwischenelement des Weiteren mit dem Zwischenelement selbst integrale Kopplungsmittel aufweist, die sich von dem Kopplungselement unterscheiden und dazu ausgebildet sind, den zumindest einen zu behandelnden Behälter lösbar zu halten. Des Weiteren betrifft die Druckschrift US 2018/037343 A1 Systeme und Verfahren zur aseptischen Befüllung pharmazeutischer Behälter mit pharmazeutischer Flüssigkeit.

Es ist daher eine Aufgabe der vorliegenden Erfindung, ein verbessertes Verfahren und ein verbessertes Transfersystem zum Transferieren von zumindest einer Füllnadel einer Anzahl von Füllnadeln in einen aseptischen Isolator bereitzustellen.

Gemäß einem ersten Aspekt der Erfindung wird daher ein Verfahren zum Transferieren zumindest einer Füllnadel einer Anzahl von Füllnadeln in einen Isolator, insbesondere einen aseptischen Isolator, der eine Transferschleuse aufweist, vorgeschlagen. Das Verfahren weist dabei die folgenden Schritte auf:
- Bereitstellen eines ersten Nadelträgers innerhalb der Transferschleuse, der die Anzahl von Füllnadeln trägt;
- Bereitstellen eines zweiten Nadelträgers in einer ersten Position innerhalb des aseptischen Isolators;
- robotergestütztes Transferieren der zumindest einen Füllnadel der Anzahl von Füllnadeln von dem ersten Nadelträger zu dem zweiten Nadelträger; und
- robotergestütztes Anordnen der zumindest einen Füllnadel der Anzahl von Füllnadeln in dem zweiten Nadelträger, wobei die zumindest eine Füllnadel der Anzahl von Füllnadeln während des robotergestützten Anordnens direkt gehalten ist.

Wie eingangs erwähnt, ist unter dem Begriff "Isolator" vorliegend ein Behälter zu verstehen, der gegenüber dem umgebenden Arbeitsraum hermetisch und gasdicht abgeschlossen ist. Es kann für den Isolator auch der Begriff Isolatorkammer verwendet werden. Innerhalb des Isolators kann eine definierte Atmosphäre zur Bearbeitung empfindlicher oder gefährlicher Produkte, insbesondere pharmazeutischer oder kosmetischer Produkte, erzeugt werden. Der Isolator kann ein aseptischer Isolator sein. Ein aseptischer Isolator kann beispielsweise ein Reinraum, Reinstraum oder dergleichen sein.

Ferner bezeichnet der Begriff "Transferschleuse" vorliegend eine Einrichtung zum Übergang zwischen zwei Bereichen mit vorzugsweise unterschiedlichen Eigenschaften, insbesondere einem Bereich innerhalb des aseptischen Isolators und einem Bereich außerhalb des aseptischen Isolators. In dem Kontext der vorliegenden Erfindung ist die Transferschleuse vorzugsweise derart ausgebildet, dass innerhalb der Transferschleuse ein aseptischer Zustand bereitgestellt ist oder wahlweise hergestellt werden kann. Dadurch kann sichergestellt werden, dass die zu transferierenden Gegenstände den bestehenden aseptischen Zustand innerhalb des aseptischen Isolators nicht beeinträchtigen bzw. zerstören. Derartige Verfahren zum Herstellen einer aseptischen Umgebung innerhalb der Transferschleuse sind in der Industrie bekannt.

Unter dem Bereitstellen oder dem Herstellen eines aseptischen Zustandes im Inneren der Transferschleuse ist das Bereitstellen oder Herstellen dieses Zustandes in der gesamten inneren Umgebung der Transferschleuse sowie auf im Wesentlichen allen exponierten Innenflächen der Transferschleuse zu verstehen. Dazu gehören die Oberflächen aller Gegenstände, Behälter, Subsysteme und/oder dergleichen, die der Innenraumatmosphäre der Transferschleuse ausgesetzt sind.

Eine derartige Transferschleuse kann vorliegend beispielsweise ein flexibler Sterilbeutel sein, der die in dem Sterilbeutel anordenbaren Gegenstände (z.B. Füllnadeln, Nadelträger, Objekte, etc.) vorsterilisiert über ein Schleusen- bzw. Schließsystem dem aseptischen Isolator, vorzugsweise zum Befüllen der Objekte, zuführt. In der Isolatortechnik sind derartige Sterilbeutel bekannt. Diese weisen in der Regel einen Adapter auf, mit dem der Sterilbeutel beispielsweise mit einem sogenannten Alpha-Port des aseptischen Isolators steril gekoppelt werden kann. Ein Alpha-Port kann eine Aussparung, z.B. ein Durchgangsloch und/oder eine Tür oder dergleichen, in einem Wandabschnitt des aseptischen Isolators sein. Der Sterilbeutel kann einen Beta-Port aufweisen, der z.B. als eine Tür oder dergleichen ausgebildet sein kann, die derart an dem Alpha-Port angebracht ist, dass der Alpha-Port und der Beta-Port gemeinsam geöffnet werden können.

Alternativ kann die Transferschleuse jedoch auch als starrer Transportbehälter ausgebildet sein, der einen Beta-Port aufweist und nach dem vorgenannten Prinzip mit dem Alpha-Port des aseptischen Isolators koppelbar ist, um ein steriles Verbringen der darin anordenbaren Gegenstände in den aseptischen Isolator zu ermöglichen. Ein Beispiel für eine Konfiguration ist in der Druckschrift GB 2 237 816 A gezeigt.

Unter dem Begriff "Nadelträger" ist vorliegend eine Vorrichtung zu verstehen, die dazu ausgebildet ist, eine Anzahl von Füllnadeln zu tragen. Das Tragen der Anzahl von Füllnadeln kann dabei auf unterschiedliche Weise erfolgen. So kann der Nadelträger beispielsweise zumindest ein Durchgangsloch zum Tragen zumindest einer Füllnadel darin aufweisen. Grundsätzlich sind jedoch auch andere Verbindungsarten denkbar. Optional kann die zumindest eine Füllnadel magnetisch in oder an einem Nadelträger angeordnet sein. Ein solches magnetisches Anordnen kann die Handhabung der zumindest einen Füllnadel erleichtern, insbesondere im Hinblick auf das robotergestützte Anordnen (z.B. die Selbstzentrierung) derselben in der Aufnahme des Nadelträgers. Es kann auch vorgesehen sein, dass die zumindest eine Füllnadel formschlüssig in oder an dem Nadelträger angeordnet ist (z.B. mittels einer Clip- oder Schnappverbindung).

Des Weiteren kann die Anzahl von Füllnadeln in einer regelmäßigen oder unregelmäßigen Anordnung in dem ersten Nadelträger angeordnet sein. Eine regelmäßige Anordnung kann beispielsweise eine lineare, regelmäßige Anordnung (z.B. in Form einer Matrix) oder eine kreisförmige, regelmäßige Anordnung (z.B. in Form eines Kreismusters) sein. Analoges gilt für die Anordnung der zumindest einen Füllnadel in dem zweiten Nadelträger.

Unter dem Begriff "direkt gehalten" ist vorliegend zu verstehen, dass die zumindest eine Füllnadel unmittelbar mittels eines Roboter-Endeffektors gehalten ist. Sie ist nicht etwa mittelbar (z.B. durch Halten des Nadelträgers selbst) mittels des Roboter-Endeffektors gehalten. Dabei kann die zumindest eine Füllnadel mechanisch, insbesondere formschlüssig oder kraftschlüssig, oder magnetisch gehalten werden. Beispielsweise kann die zumindest eine Füllnadel mittels einer lösbaren Clip-Verbindung robotergestützt gehalten werden. Die zumindest eine Füllnadel kann auch mittels eines Robotergreifers direkt ergriffen werden.

Unter dem Begriff "direkt ergriffen" ist vorliegend zu verstehen, dass die zumindest eine Füllnadel unmittelbar mittels eines Robotergreifers ergriffen ist. Sie ist nicht etwa mittelbar (z.B. durch Greifen des Nadelträgers selbst) mittels des Robotergreifers ergriffen.

Der Begriff "robotergestützt" bzw. "Roboter" ist vorliegend derart zu verstehen, dass die gekennzeichneten Verfahrensschritte (z.B. der Schritt des robotergestützten Transferierens und der Schritt des robotergestützten Anordnens, etc.) mittels einer automatisierten Bewegungsapparatur jeglicher Art ausgeführt werden. Dabei kann es sich beispielsweise um eine Handlingseinheit, einen Manipulator, eine Kinematik oder dergleichen handeln, die den Roboter ausbildet. Bei der Bewegungsapparatur kann es sich beispielsweise um eine Konstruktion mit Mehrachs-Bewegungen jeglicher Art handeln. Beispielsweise kann eine derartige Konstruktion Zwei- bis Sechsachsbewegungen jeglicher Art aufweisen.

Gemäß einem zweiten Aspekt der Erfindung wird ein Transfersystem zum Transferieren zumindest einer Füllnadel einer Anzahl von Füllnadeln in einen Isolator, insbesondere einen aseptischen Isolator, vorgeschlagen, wobei das Transfersystem aufweist:
- den aseptischen Isolator, der eine Transferschleuse aufweist, wobei innerhalb der Transferschleuse ein erster Nadelträger, der die Anzahl von Füllnadeln trägt, bereitgestellt ist, und wobei in einer ersten Position innerhalb des aseptischen Isolators ein zweiter Nadelträger bereitgestellt ist;
- mindestens einen Roboter mit einem Roboter-Endeffektor, der innerhalb des aseptischen Isolators angeordnet ist; und
- eine Steuerung, die derart ausgebildet ist, dass die folgenden Schritte ausgeführt werden:
- robotergestütztes Transferieren der zumindest einen Füllnadel der Anzahl von Füllnadeln von dem ersten Nadelträger zu dem zweiten Nadelträger; und
- robotergestütztes Anordnen der zumindest einen Füllnadel der Anzahl von Füllnadeln in dem zweiten Nadelträger, wobei die zumindest eine Füllnadel der Anzahl von Füllnadeln während des robotergestützten Anordnens direkt durch den Roboter-Endeffektor gehalten ist.

Der zumindest eine Roboter gemäß dem zweiten Aspekt der Erfindung weist eine, insbesondere gelenkige, Trägerstruktur auf, an deren Ende ein Roboter-Endeffektor angeordnet ist. Die Trägerstruktur ist dazu ausgebildet, den Roboter-Endeffektor in allen drei Raumrichtungen zu bewegen.

Gemäß einem dritten Aspekt der Erfindung wird ein Computerprogramm mit einem Programmcode vorgeschlagen, der dazu ausgebildet ist, wenn er in der Steuerung des Transfersystems gemäß dem zweiten Aspekt der Erfindung ausgeführt wird, die folgenden Schritte auszuführen:
- robotergestütztes Transferieren der zumindest einen Füllnadel der Anzahl von Füllnadeln von dem ersten Nadelträger zu dem zweiten Nadelträger; und
- robotergestütztes Anordnen der zumindest einen Füllnadel der Anzahl von Füllnadeln in dem zweiten Nadelträger, wobei die zumindest eine Füllnadel der Anzahl von Füllnadeln während des robotergestützten Anordnens direkt gehalten ist.

Durch das Bereitstellen der Anzahl von Füllnadeln in einem ersten Nadelträger innerhalb der Transferschleuse wird das anschließende robotergestützte Transferieren der zumindest einen Füllnadel der Anzahl von Füllnadeln in den zweiten Nadelträger innerhalb des aseptischen Isolators deutlich vereinfacht. Insbesondere kann dadurch ein aufwändiges Entpacken und/oder Ausrichten der Anzahl von Füllnadeln vermieden werden, da die Anzahl von Füllnadeln bereits in einer vorgegebenen Ausrichtung in dem ersten Nadelträger angeordnet ist.

Komplementär zu dem ersten Nadelträger ist ein zweiter Nadelträger innerhalb des aseptischen Isolators bereitgestellt. Durch das robotergestützte Transferieren der zumindest einen Füllnadel der Anzahl von Füllnadeln von dem ersten Nadelträger zu dem zweiten Nadelträger und das robotergestützte Anordnen der zumindest einen Füllnadel der Anzahl von Füllnadeln in dem zweiten Nadelträger, wobei die zumindest eine Füllnadel der Anzahl von Füllnadeln während des robotergestützten Anordnens direkt gehalten ist, kann ein automatisiertes und sicheres Transferieren der zumindest einen Füllnadel in den aseptischen Isolator realisiert werden.

Gemäß einem vierten Aspekt der Erfindung wird ein Verfahren zum Transferieren zumindest einer Füllnadel einer Anzahl von Füllnadeln aus einem Isolator, insbesondere einem aseptischen Isolator, der eine Transferschleuse aufweist, vorgeschlagen, wobei das Verfahren die folgenden Schritte aufweist:
- Bereitstellen eines ersten Nadelträgers innerhalb der Transferschleuse;
- Bereitstellen eines zweiten Nadelträgers in einer ersten Position innerhalb des Isolators, der die Anzahl von Füllnadeln trägt;
- robotergestütztes Entnehmen der zumindest einen Füllnadel der Anzahl von Füllnadeln aus dem zweiten Nadelträger, wobei die zumindest eine Füllnadel der Anzahl von Füllnadeln während des robotergestützten Entnehmens direkt gehalten ist; und
- robotergestütztes Transferieren der zumindest einen Füllnadel der Anzahl von Füllnadeln von dem zweiten Nadelträger zu dem ersten Nadelträger.

Gemäß einem fünften Aspekt der Erfindung wird ein Transfersystem zum Transferieren zumindest einer Füllnadel einer Anzahl von Füllnadeln aus einem Isolator, insbesondere einem aseptischen Isolator, vorgeschlagen, wobei das Transfersystem aufweist:
- den Isolator, der eine Transferschleuse aufweist, wobei in einer ersten Position innerhalb des Isolators ein zweiter Nadelträger bereitgestellt ist, wobei der zweite Nadelträger die Anzahl von Füllnadeln trägt;
- einen ersten Nadelträger, der innerhalb der Transferschleuse angeordnet ist;
- mindestens einen Roboter mit einem Roboter-Endeffektor, der innerhalb des Isolators angeordnet ist; und
- eine Steuerung, die derart ausgebildet ist, dass die folgenden Schritte ausgeführt werden:
- robotergestütztes Entnehmen der zumindest einen Füllnadel der Anzahl von Füllnadeln aus dem zweiten Nadelträger, wobei die zumindest eine Füllnadel der Anzahl von Füllnadeln während des robotergestützten Entnehmens direkt durch den Roboter-Endeffektor gehalten ist; und
- robotergestütztes Transferieren der zumindest einen Füllnadel der Anzahl von Füllnadeln von dem zweiten Nadelträger zu dem ersten Nadelträger.

Gemäß einem sechsten Aspekt der Erfindung wird ein Computerprogramm mit einem Programmcode vorgeschlagen, der dazu ausgebildet ist, wenn er in der Steuerung des Transfersystems gemäß dem fünften Aspekt der Erfindung ausgeführt wird, die folgenden Schritte auszuführen:
- robotergestütztes Entnehmen der zumindest einen Füllnadel der Anzahl von Füllnadeln aus dem zweiten Nadelträger, wobei die zumindest eine Füllnadel der Anzahl von Füllnadeln während des robotergestützten Entnehmens direkt durch den Roboter-Endeffektor gehalten ist; und
- robotergestütztes Transferieren der zumindest einen Füllnadel der Anzahl von Füllnadeln von dem zweiten Nadelträger zu dem ersten Nadelträger.

Die eingangs gestellte Aufgabe wird daher vollkommen gelöst.

In einer Ausgestaltung des Verfahrens gemäß dem ersten Aspekt kann vorgesehen sein, dass der zweite Nadelträger in einer Füllstation ist, in der Objekte mittels der zumindest einen Füllnadel der Anzahl von Füllnadeln mit einem Fluid, insbesondere einem pharmazeutischen oder einem kosmetischen Fluid, befüllt werden.

Ein Vorteil dieser Ausgestaltung ist, dass die zumindest eine Füllnadel der Anzahl von Füllnadeln direkt in einer Füllstation zum Befüllen der Objekte angeordnet wird, wodurch weitere Arbeitsschritte (z.B. ein weiteres Positionieren der Anzahl von Füllnadeln innerhalb des aseptischen Isolators, um das Befüllen von Objekten durchzuführen) vermieden werden können.

In einer weiteren Ausgestaltung des Verfahrens gemäß dem ersten Aspekt kann vorgesehen sein, dass die zumindest eine Füllnadel der Anzahl von Füllnadeln gesamthaft von dem ersten Nadelträger zu dem zweiten Nadelträger transferiert wird.

Das bedeutet mit anderen Worten, dass die zumindest eine Füllnadel der Anzahl von Füllnadeln direkt und gesamthaft (d.h. "alle auf einmal") aus dem ersten Nadelträger ergriffen wird und schließlich gesamthaft in dem zweiten Nadelträger angeordnet wird. Ein Vorteil dieser Ausgestaltung ist ein hoher Durchsatz von Füllnadeln (d.h. transferierte Anzahl von Füllnadeln pro Zeiteinheit), woraus sich wiederum ein effizienterer Betrieb des aseptischen Isolators ergibt. Das gesamthafte Transferieren der zumindest einen Füllnadel erweist sich insbesondere dann als vorteilhaft, wenn der erste Nadelträger und der zweite Nadelträger im Wesentlichen identisch sind, d.h. gleiche Füllnadelabstände und eine gleiche Füllnadelanordnung aufweisen.

In einer weiteren Ausgestaltung des Verfahrens gemäß dem ersten Aspekt kann vorgesehen sein, die zumindest eine Füllnadel der Anzahl von Füllnadeln jeweils einzeln von dem ersten Nadelträger zu dem zweiten Nadelträger transferiert wird.

Das bedeutet mit anderen Worten, dass die zumindest eine Füllnadel der Anzahl von Füllnadeln in direkter Weise und einzeln aus dem ersten Nadelträger ergriffen wird und schließlich einzeln in dem zweiten Nadelträger angeordnet wird. Ein Vorteil dieser Ausgestaltung ist, dass der Schritt des Anordnens in dem zweiten Nadelträger auch dann erfolgen kann, wenn der erste Nadelträger und der zweite Nadelträger sich hinsichtlich einer Füllnadelanordnung und/oder der Füllnadelabstände unterscheiden.

In einer weiteren Ausgestaltung des Verfahrens gemäß dem ersten Aspekt kann vorgesehen sein, dass der Schritt des robotergestützten Transferierens der zumindest einen Füllnadel der Anzahl von Füllnadeln von dem ersten Nadelträger zu dem zweiten Nadelträger die folgenden Schritte aufweist:
- erstes robotergestütztes Transferieren der zumindest einen Füllnadel der Anzahl von Füllnadeln von dem ersten Nadelträger zu einem dritten Nadelträger, der in einer zweiten Position innerhalb des aseptischen Isolators angeordnet ist, wobei die zweite Position von der ersten Position beabstandet ist;
- robotergestütztes Anordnen der zumindest einen Füllnadel der Anzahl von Füllnadeln in dem dritten Nadelträger; und
wobei der Schritt des robotergestützten Anordnens der zumindest einen Füllnadel der Anzahl von Füllnadeln in dem zweiten Nadelträger den folgenden Schritt aufweist:
- zweites robotergestütztes Transferieren der zumindest einen Füllnadel der Anzahl von Füllnadeln von dem dritten Nadelträger zu dem zweiten Nadelträger, wobei die zumindest eine Füllnadel der Anzahl von Füllnadeln während des zweiten robotergestützten Transferierens direkt gehalten ist.

In dieser Ausgestaltung erfolgt das robotergestützte Transferieren der zumindest einen Füllnadel der Anzahl von Füllnadeln von dem ersten Nadelträger zu dem zweiten Nadelträger mittels eines dritten Nadelträgers, der sich ebenfalls innerhalb des aseptischen Isolators befindet. Ein Vorteil dieser Ausgestaltung ist, dass, wenn eine Handhabung der zumindest einen Füllnadel zu schwierig ist und/oder ein Abstand zwischen dem ersten Nadelträger und dem zweiten Nadelträger außerhalb einer Reichweite eines Roboter-Endeffektors liegt, die zumindest eine Füllnadel dennoch in dem zweiten Nadelträger angeordnet werden kann.

In einer weiteren Ausgestaltung des Verfahrens gemäß dem ersten Aspekt kann vorgesehen sein, dass der dritte Nadelträger ein Zwischenträger ist, in dem die zumindest eine Füllnadel getragen wird, bevor sie in den zweiten Nadelträger transferiert wird.

Mit anderen Worten bedeutet das, dass die zumindest eine Füllnadel der Anzahl von Füllnadeln in dem dritten nadelträger "geparkt" wird. Ein Vorteil dieser Ausgestaltung ist, dass, wenn eine Handhabung der zumindest einen Füllnadel zu schwierig ist und/oder ein Abstand zwischen dem ersten Nadelträger und dem zweiten Nadelträger außerhalb einer Reichweite eines Roboter-Endeffektors liegt, die zumindest eine Füllnadel dennoch in dem zweiten Nadelträger angeordnet werden kann.

In einer weiteren Ausgestaltung des Verfahrens gemäß dem ersten Aspekt kann vorgesehen sein, dass die zumindest eine Füllnadel der Anzahl von Füllnadeln gesamthaft von dem ersten Nadelträger zu dem dritten Nadelträger transferiert wird.

Die zumindest eine Füllnadel der Anzahl von Füllnadeln wird direkt und gesamthaft aus dem ersten Nadelträger ergriffen und gesamthaft in dem dritten Nadelträger angeordnet. Ein Vorteil dieser Ausgestaltung ist ein hoher Durchsatz von Füllnadeln (d.h. transferierte Anzahl von Füllnadeln pro Zeiteinheit), woraus sich wiederum ein effizienterer Betrieb des aseptischen Isolators ergibt.

In einer weiteren Ausgestaltung des Verfahrens gemäß dem ersten Aspekt kann vorgesehen sein, dass die zumindest eine Füllnadel der Anzahl von Füllnadeln jeweils einzeln von dem ersten Nadelträger zu dem dritten Nadelträger transferiert wird.

Die zumindest eine Füllnadel der Anzahl von Füllnadeln wird in direkter Weise und einzeln aus dem ersten Nadelträger ergriffen wird und anschließend einzeln in dem dritten Nadelträger angeordnet.

Ein Vorteil dieser Ausgestaltung ist, dass der Schritt des Anordnens in dem dritten Nadelträger auch dann problemlos erfolgen kann, wenn der erste Nadelträger und der zweite Nadelträger sich hinsichtlich einer Füllnadelanordnung und/oder der Füllnadelabstände unterscheiden.

In einer weiteren Ausgestaltung des Verfahrens gemäß dem ersten Aspekt kann vorgesehen sein, dass, wenn die zumindest eine Füllnadel der Anzahl von Füllnadeln gesamthaft von dem ersten Nadelträger zu dem dritten Nadelträger transferiert wird, die zumindest eine Füllnadel der Anzahl von Füllnadeln jeweils einzeln von dem dritten Nadelträger zu dem zweiten Nadelträger transferiert wird.

Diese Ausgestaltung erweist sich hinsichtlich der Transfereffizienz als vorteilhaft. Beispielsweise dann, wenn eine Füllnadelanordnung in dem ersten Nadelträger im Wesentlichen einer Füllnadelanordnung in dem dritten Nadelträger entspricht, und eine Füllnadelanordnung in dem zweiten Nadelträger sich von der Füllnadelanordnung in dem dritten Nadelträger unterscheidet.

In einer weiteren Ausgestaltung des Verfahrens gemäß dem ersten Aspekt kann vorgesehen sein, dass, wenn die zumindest eine Füllnadel der Anzahl von Füllnadeln jeweils einzeln von dem ersten Nadelträger zu dem dritten Nadelträger transferiert wird, die zumindest eine Füllnadel der Anzahl von Füllnadeln gesamthaft von dem dritten Nadelträger zu dem zweiten Nadelträger transferiert wird.

Diese Ausgestaltung erweist sich hinsichtlich der Transfereffizienz als vorteilhaft. Beispielsweise dann, wenn eine Füllnadelanordnung in dem ersten Nadelträger sich von einer Füllnadelanordnung in dem dritten Nadelträger unterscheidet, und eine Füllnadelanordnung in dem zweiten Nadelträger im Wesentlichen der Füllnadelanordnung in dem dritten Nadelträger entspricht.

In einer weiteren Ausgestaltung des Verfahrens gemäß dem ersten Aspekt kann vorgesehen sein, dass der Schritt des robotergestützten Transferierens der zumindest einen Füllnadel der Anzahl von Füllnadeln von dem ersten Nadelträger zu dem zweiten Nadelträger die folgenden Schritte aufweist:
- erstes robotergestütztes Transferieren des ersten Nadelträgers mitsamt der Anzahl von Füllnadeln von der Transferschleuse in eine zweite Position innerhalb des aseptischen Isolators, wobei die zweite Position von der ersten Position beabstandet ist;
- robotergestütztes Anordnen des ersten Nadelträgers in der zweiten Position; und
- wobei der Schritt des robotergestützten Anordnens der zumindest einen Füllnadel der Anzahl von Füllnadeln in dem zweiten Nadelträger den folgenden Schritt aufweist:
- zweites robotergestütztes Transferieren der zumindest einen Füllnadel der Anzahl von Füllnadeln von dem ersten Nadelträger zu dem zweiten Nadelträger, wobei die zumindest eine Füllnadel der Anzahl von Füllnadeln während des zweiten robotergestützten Transferierens direkt gehalten ist.

Damit wird der Nadelträger mitsamt der darin angeordneten Anzahl von Füllnadeln von der Transferschleuse in den aseptischen Isolator transferiert und in einer zweiten Position, die einer Zwischenposition entspricht, angeordnet. Die Anzahl von Füllnadeln kann somit gleichzeitig in den aseptischen Isolator verbracht werden kann, ohne dabei die Füllnadeln direkt zu halten. Das direkte Aufnehmen des Nadelträgers vereinfacht das Greifen und Transferieren in den aseptischen Isolator erheblich und spart Zeit.

In einer weiteren Ausgestaltung des Verfahrens gemäß dem ersten Aspekt kann vorgesehen sein, dass die zumindest eine Füllnadel der Anzahl von Füllnadeln gesamthaft von dem in der zweiten Position angeordneten ersten Nadelträger zu dem zweiten Nadelträger transferiert wird.

Diese Ausgestaltung erweist sich hinsichtlich der Transfereffizienz als vorteilhaft. Beispielsweise dann, wenn eine Füllnadelanordnung in dem ersten Nadelträger im Wesentlichen einer Füllnadelanordnung in dem zweiten Nadelträger entspricht.

In einer weiteren Ausgestaltung des Verfahrens gemäß dem ersten Aspekt kann vorgesehen sein, dass die zumindest eine Füllnadel der Anzahl von Füllnadeln jeweils einzeln von dem in der zweiten Position angeordneten ersten Nadelträger zu dem dritten Nadelträger transferiert wird.

Diese Ausgestaltung erweist sich hinsichtlich der Transfereffizienz als vorteilhaft. Beispielsweise dann, wenn eine Füllnadelanordnung in dem ersten Nadelträger sich von einer Füllnadelanordnung in dem zweiten Nadelträger unterscheidet.

In einer weiteren Ausgestaltung des Verfahrens gemäß dem ersten Aspekt kann vorgesehen sein, dass der erste Nadelträger einen Grundkörper zum Tragen der Anzahl von Füllnadeln und mindestens einen Vorsprung aufweist, wobei der mindestens eine Vorsprung sich von dem Grundkörper aus erstreckt und eine kreiszylindrische Form aufweist.

Ein derartiger Vorsprung erleichtert beispielsweise eine (lösbare) Kopplung des ersten Nadelträgers mit einem Roboter-Endeffektor, der eine entsprechende Gegenaufnahme zum Greifen und Transferieren des ersten Nadelträgers aufweist. Der erste Nadelträger kann beispielsweise genau einen Vorsprung aufweisen. Alternativ kann der erste Nadelträger auch zwei oder mehr Vorsprünge aufweisen, um eine zusätzliche Verdrehsicherung des Nadelträgers zu gewährleisten.

Die Form des Vorsprungs ist dabei nicht auf kreiszylindrische Formen beschränkt. Auch andere Formen (z.B. prismatisch bzw. dreieckig, rechteckig bzw. quaderförmig oder dergleichen) sind möglich. Alternativ kann die Kopplung des Nadelträgers mit dem Roboter-Endeffektor beispielsweise mechanisch, insbesondere kraftschlüssig oder formschlüssig, oder magnetisch erfolgen.

In einer weiteren Ausgestaltung des Verfahrens gemäß dem ersten Aspekt kann vorgesehen sein, dass jeder von dem mindestens einen Vorsprung derart geformt ist, dass ein Roboter-Greifer eines Roboter-Endeffektors, der dazu ausgebildet ist, eine einzige Füllnadel der Anzahl von Füllnadeln oder ein mittels der einen einzigen Füllnadel der Anzahl von Füllnadeln zu befüllendes Objekt, insbesondere ein pharmazeutisches oder kosmetisches Objekt, zu ergreifen, ihn aufnehmen kann.

Das Aufnehmen des mindestens einen Vorsprungs erfolgt vorzugsweise gleichzeitig, so dass jeder von dem mindestens einen Vorsprung mittels eines Roboter-Greifers eines Roboter-Endeffektors aufgenommen wird, insbesondere gleichzeitig aufgenommen wird. Beispielsweise kann der Nadelträger genau einen Vorsprung aufweisen, der mittels eines Roboter-Greifers, der eine einzige Füllnadel oder ein mittels der einen einzigen Füllnadel zu befüllendes Objekt greifen kann, aufgenommen werden. Alternativ kann der Nadelträger genau zwei Vorsprünge aufweisen, insbesondere wobei deren Abstand zueinander vorzugsweise dem Abstand zwischen zwei benachbarten Füllnadeln und/oder dem Abstand zwischen zwei benachbarten Roboter-Greifern entspricht. Jedem der beiden Nadelträger ist somit ein entsprechender Roboter-Greifer zugeordnet. Die Anzahl der Vorsprünge kann jedoch auch größer als zwei (z.B. drei, vier, fünf usw.) sein.

Durch diese Ausgestaltung kann ein Synergieeffekt erzeugt werden, der die Interaktion mit dem Roboter-Endeffektor erleichtert. Mit anderen Worten, kann hierdurch ein multifunktionaler Gebrauch und damit einhergehend ein weniger komplexer Aufbau des Roboter-Endeffektors realisiert werden. Ferner kann durch das Vorsehen von mehr als einem Vorsprung eine Verdrehsicherung des Nadelträgers gewährleistet werden.

In einer weiteren Ausgestaltung des Verfahrens gemäß dem ersten Aspekt kann des Weiteren der Folgende Schritt vorgesehen sein: robotergestütztes Öffnen der Transferschleuse vor dem Schritt des robotergestützten Transferierens der zumindest einen Füllnadel der Anzahl von Füllnadeln von dem ersten Nadelträger zu dem zweiten Nadelträger.

Ein Vorteil dieser Ausgestaltung ist, dass bereits das Öffnen der Transferschleuse ohne Handschuheingriffe erfolgen kann, wodurch ein Automatisierungsgrad des Verfahrens weiter erhöht werden kann.

In einer weiteren Ausgestaltung des Verfahrens gemäß dem ersten oder vierten Aspekt kann vorgesehen sein, dass die Anzahl von Füllnadeln mittels einer Anzahl von Schläuchen in Fluidkommunikation mit einem Quellbehälter und/oder einem Fördermittel zum Fördern des Fluides ist.

Ein Vorteil dieser Ausgestaltung ist, dass eine derartige Füllnadel eine größere Fluidmenge in den aseptischen Isolator verbringen kann, als dies beispielsweise durch eine Füllnadel ohne Schlauch (z.B. eine herkömmliche Spritze) möglich wäre. Zwischen der Anzahl von Füllnadeln und dem Quellbehälter ist vorzugsweise ein Fördermittel (z.B. mindestens eine Pumpe) zum Fördern des Fluides angeordnet. Dabei kann es sich beispielsweise um eine Peristaltikpumpe, eine Rotationskolbenpumpe oder dergleichen handeln.

In einer weiteren Ausgestaltung des Verfahrens gemäß dem ersten oder vierten Aspekt kann vorgesehen sein, dass die Anzahl von Schläuchen eine Wand der Schleuse steril durchquert.

In einer weiteren Ausgestaltung des Verfahrens gemäß dem ersten oder vierten Aspekt kann vorgesehen sein, dass die Anzahl von Füllnadeln eine einzige Füllnadel ist. Es kann auch vorgesehen sein, dass die Anzahl von Füllnadeln zwei Füllnadeln ist. Die Anzahl von Füllnadeln kann auch von mehr Füllnadeln gebildet werden. Beispielsweise kann die Anzahl von Füllnadeln von drei, vier, fünf oder sechs Füllnadeln gebildet werden.

In einer Ausgestaltung des Transfersystems gemäß dem zweiten oder fünften Aspekt kann vorgesehen sein, dass sich der aseptische Isolator und die Transferschleuse einen gemeinsamen Wandabschnitt teilen und sich eine Öffnung durch die gemeinsame Wand erstreckt, wobei eine Tür die Öffnung lösbar verriegelt.

In einer Ausgestaltung des Transfersystems gemäß dem zweiten oder fünften Aspekt kann vorgesehen sein, dass die Anzahl von Füllnadeln mittels einer Anzahl von Schläuchen in Fluidkommunikation mit einem Quellbehälter und/oder einem Fördermittel zum Fördern des Fluides ist.

Ein Vorteil dieser Ausgestaltung ist, dass eine derartige Füllnadel eine größere Fluidmenge in den aseptischen Isolator verbringen kann, als dies beispielsweise durch eine Füllnadel ohne Schlauch (z.B. eine herkömmliche Spritze) möglich wäre. Zwischen der Anzahl von Füllnadeln und dem Quellbehälter ist vorzugsweise ein Fördermittel (z.B. mindestens eine Pumpe) zum Fördern des Fluides angeordnet. Dabei kann es sich beispielsweise um eine Peristaltikpumpe, eine Rotationskolbenpumpe oder dergleichen handeln.

Es versteht sich von selbst, dass die Ausgestaltungen des Verfahrens gemäß dem ersten Aspekt der Erfindung sinngemäß auch für das Verfahren gemäß dem vierten Aspekt der Erfindung gelten.

### Darüber hinaus werden folgende Beispiele vorgeschlagen:

Gemäß einem ersten Beispiel wird ein Verfahren zum Transferieren einer Anzahl von Füllnadeln in eine Füllposition in einem Isolator, insbesondere einem aseptischen Isolator, der eine Transferschleuse aufweist, vorgeschlagen, wobei das Verfahren die folgenden Schritte aufweist:
- Bereitstellen eines Nadelträgers, wobei der Nadelträger einen Grundkörper zum Tragen der Anzahl von Füllnadeln und eine Aufnahme aufweist;
- robotergestütztes Aufnehmen des Nadelträgers, über die Aufnahme, wobei der Nadelträger die Anzahl von Füllnadeln trägt;
- robotergestütztes Transferieren des Nadelträgers mit der Anzahl von Füllnadeln in die Füllposition in dem Isolator; und
- robotergestütztes Anordnen des Nadelträgers in der Füllposition innerhalb des Isolators, wobei der in der Füllposition angeordnete Nadelträger in einer Füllstation ist, in der eine Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

Der Nadelträger gemäß dem ersten Beispiel weist einen Grundkörper und eine Aufnahme auf. Der Grundkörper kann beispielsweise blockförmig bzw. quaderförmig ausgebildet sein. Alternativ kann der Grundkörper auch zylinderförmig ausgebildet sein oder weitere gängige Formen (z.B. dreieckige Formen, mehreckige Formen, oder dergleichen) aufweisen. Das Aufnehmen des Nadelträgers wird vorzugsweise mittels eines Roboter-Endeffektors ausgeführt. Ein derartiges robotergestütztes Aufnehmen des Nadelträgers kann auf unterschiedliche Art und Weise erfolgen. Beispielsweise kann das Aufnehmen des Nadelträgers mechanisch, insbesondere kraftschlüssig oder formschlüssig, erfolgen. Alternativ kann das robotergestützte Aufnehmen des Nadelträgers beispielsweise auch magnetisch ausgeführt werden.

Ein Vorteil dieser Ausgestaltung ist, dass die Anzahl von Füllnadeln direkt in einer Füllstation zum Befüllen der Objekte angeordnet wird, wodurch weitere Arbeitsschritte (z.B. ein weiteres Positionieren der Anzahl von Füllnadeln innerhalb des aseptischen Isolators, um das Befüllen von Objekten durchzuführen) vermieden werden können.

Das bedeutet mit anderen Worten, dass der Nadelträger nicht in der Füllposition abgestellt wird, sondern direkt an einem ausführenden Roboter-Endeffektor verbleibt. Eine Füllnadelbewegung, insbesondere eine Relativbewegung zwischen Füllnadel und Objekt während des Füllvorgangs in der Füllstation, kann somit robotergestützt erfolgen. Ein Vorteil dieser Ausgestaltung ist eine hohe Füllgenauigkeit. Alternativ kann das robotergestützte Anordnen des Nadelträgers in der Füllposition innerhalb des Isolators derart sein, dass der Nadelträger in der Füllposition abgestellt wird. In diesem Fall verbleibt der Nadelträger während des Füllvorgangs nicht in dem ausführenden Roboter-Endeffektor.

In einer Ausgestaltung des Verfahrens gemäß dem ersten Beispiel kann vorgesehen sein, dass der Nadelträger mit der Anzahl von Füllnadeln innerhalb der Transferschleuse bereitgestellt wird.

Das bedeutet mit anderen Worten, dass der Nadelträger mit der Anzahl von Füllnadeln zunächst in der Transferschleuse bereitgestellt wird. Ausgehend von der Transferschleuse wird der Nadelträger schließlich robotergestützt in die Füllposition verbracht. Ein Vorteil dieser Ausgestaltung ist die einfachere Handhabung der Anzahl von Füllnadeln.

In einer weiteren Ausgestaltung des Verfahrens gemäß dem ersten Beispiel kann vorgesehen sein, der Nadelträger in einer von der Füllposition beabstandeten Position innerhalb des Isolators bereitgestellt wird, wobei das Verfahren vor dem Schritt des robotergestützten Transferierens die folgenden Schritte aufweist:
- Bereitstellen eines Transferschleusen-Nadelträgers innerhalb der Transferschleuse, wobei der Transferschleusen-Nadelträger die Anzahl von Füllnadeln trägt;
- robotergestütztes Transferieren der Anzahl von Füllnadeln von dem Transferschleusen-Nadelträger zu dem Nadelträger;
- robotergestütztes Anordnen der Anzahl von Füllnadeln in dem Nadelträger, wobei die Anzahl von Füllnadeln während des robotergestützten Transferierens zu dem Nadelträger direkt gehalten ist.

Unter dem Begriff "direkt gehalten" ist vorliegend zu verstehen, dass die zumindest eine Füllnadel unmittelbar mittels eines Roboter-Endeffektors gehalten ist. Sie ist nicht etwa mittelbar (z.B. durch Halten des Nadelträgers selbst) mittels des Roboter-Endeffektors gehalten. Dabei kann die zumindest eine Füllnadel mechanisch, insbesondere formschlüssig oder kraftschlüssig, oder magnetisch gehalten werden. Beispielsweise kann die zumindest eine Füllnadel mittels einer lösbaren Clip-Verbindung robotergestützt gehalten werden. Die zumindest eine Füllnadel kann auch mittels eines Robotergreifers direkt ergriffen werden.

Demnach wird die Anzahl von Füllnadeln zunächst direkt aus dem Transferschleusen-Nadelhalter entnommen und in dem Nadelträger innerhalb des Isolators angeordnet. Dabei kann die Anzahl von Füllnadeln jeweils einzeln oder gesamthaft von dem Transferschleusen-Nadelträger zu dem Nadelträger transferiert werden.

In einer weiteren Ausgestaltung des Verfahrens gemäß dem ersten Beispiel kann vorgesehen sein, dass während des robotergestützten Transferierens der Nadelträger mittels mehr als einem Roboter transferiert wird, wobei der Nadelträger von einem Roboter zu einem weiteren Roboter übergeben wird.

Die Verwendung von mehr als einem Roboter kann beispielsweise dann von Vorteil sein, wenn eine zu "überbrückende" Distanz zwischen der Ausgangsposition des Nadelträgers und der Füllposition des Nadelträgers eine Reichweite eines oder mehrerer Roboter übersteigt. Das Übergeben des Nadelträgers kann beispielsweise derart sein, dass der Nadelträger von einem Roboter in einer Zwischenposition in dem Isolator angeordnet wird, bevor der Nadelträger von einem weiteren Roboter aufgenommen und in die Füllposition transferiert wird. Alternativ kann der Nadelträger beispielsweise auch direkt (d.h. ohne das vorübergehende Anordnen in einer Zwischenposition) übergeben werden.

In einer weiteren Ausgestaltung des Verfahrens gemäß dem ersten Beispiel kann vorgesehen sein, dass die Aufnahme mindestens ein Vorsprung ist, der sich von dem Grundkörper aus erstreckt, wobei jeder Vorsprung von dem mindestens einen Vorsprung derart geformt ist, dass ein Roboter-Greifer eines Roboter-Endeffektors, der dazu ausgebildet ist, eine einzige Füllnadel der Anzahl von Füllnadeln oder ein mittels der einen einzigen Füllnadel zu befüllendes Objekt, insbesondere ein pharmazeutisches oder kosmetisches Objekt, aufzunehmen, ihn aufnehmen kann.

Das Aufnehmen des mindestens einen Vorsprungs erfolgt vorzugsweise gleichzeitig, so dass jeder von dem mindestens einen Vorsprung mittels eines Roboter-Greifers eines Roboter-Endeffektors aufgenommen wird, insbesondere gleichzeitig aufgenommen wird. Beispielsweise kann der Nadelträger genau einen Vorsprung aufweisen, der mittels eines Roboter-Greifers, der eine einzige Füllnadel oder ein mittels der einen einzigen Füllnadel zu befüllendes Objekt aufnehmen kann, aufgenommen werden. Alternativ kann der Nadelträger genau zwei Vorsprünge aufweisen, insbesondere wobei deren Abstand zueinander vorzugsweise dem Abstand zwischen zwei benachbarten Füllnadeln und/oder dem Abstand zwischen zwei benachbarten Roboter-Greifern entspricht. Jedem der beiden Nadelträger ist somit ein entsprechender Roboter-Greifer zugeordnet. Die Anzahl der Vorsprünge kann jedoch auch größer als zwei (z.B. drei, vier, fünf usw.) sein.

Durch diese Ausgestaltung kann ein Synergieeffekt erzeugt werden, der die Interaktion mit dem Roboter-Endeffektor erleichtert. Mit anderen Worten, kann hierdurch ein multifunktionaler Gebrauch und damit einhergehend ein weniger komplexer Aufbau des Roboter-Endeffektors realisiert werden. Ferner kann durch das Vorsehen von mehr als einem Vorsprung eine Verdrehsicherung des Nadelträgers gewährleistet werden.

In einer weiteren Ausgestaltung des Verfahrens gemäß dem ersten Beispiel kann vorgesehen sein, dass jeder Vorsprung von dem mindestens einen Vorsprung eine kreiszylindrische Form aufweist.

Durch diese Ausgestaltung kann ein Synergieeffekt erzeugt werden, der die Interaktion mit einem Roboter-Endeffektor erleichtert. Mit anderen Worten, kann hierdurch ein multifunktionaler Gebrauch und damit einhergehend ein weniger komplexer Aufbau des Roboter-Endeffektors realisiert werden.

In einer weiteren Ausgestaltung des Verfahrens gemäß dem ersten Beispiel kann vorgesehen sein, dass das robotergestützte Aufnehmen des Nadelträgers über die Aufnahme mittels einer Clip-Verbindung ausgeführt wird.

Eine Clip-Verbindung ist vorliegend als das lösbare, formschlüssige Fügen von Elementen bzw. Bauteilen zu verstehen. Die erfindungsgemäße Clip-Verbindung kann beispielsweise derart ausgebildet sein, dass ein Roboter-Endeffektor, insbesondere eine Anzahl von Roboter-Greifern eines Roboter-Endeffektors, ein Clip-Element aufweist, das auf die Aufnahme des Nadelträgers (d.h. auf jeden Vorsprung von dem mindestens einen Vorsprung) aufgeclipst wird.

In einer weiteren Ausgestaltung des Verfahrens gemäß dem ersten Beispiel kann vorgesehen sein, dass das robotergestützte Aufnehmen des Nadelträgers über die Aufnahme mittels einer magnetischen Verbindung ausgeführt wird.

Ein Vorteil dieser Ausgestaltung ist die vereinfachte Handhabung des Nadelträgers. Beispielsweise kann die Aufnahme ein ferromagnetisches Element oder einen Magneten aufweisen, um eine magnetische Kopplung mit einem entsprechend ausgebildeten Roboter-Endeffektor zu ermöglichen.

In einer weiteren Ausgestaltung des Verfahrens gemäß dem ersten Beispiel kann vorgesehen sein, dass das Verfahren des Weiteren den Schritt aufweist: robotergestütztes Öffnen der Transferschleuse, bevor der Nadelträger über die Aufnahme aufgenommen wird.

Ein Vorteil dieser Ausgestaltung ist, dass bereits das Öffnen der Transferschleuse ohne Handschuheingriffe erfolgen kann, wodurch ein Automatisierungsgrad des Verfahrens weiter erhöht werden kann.

Gemäß einem zweiten Beispiel wird ein Transfersystem zum Transferieren einer Anzahl von Füllnadeln in eine Füllposition in einem Isolator, insbesondere einem aseptischen Isolator, vorgeschlagen, wobei das Transfersystem aufweist:
- den Isolator, der eine Transferschleuse aufweist;
- einen Nadelträger, wobei der Nadelträger einen Grundkörper zum Tragen der Anzahl von Füllnadeln und eine Aufnahme aufweist;
- mindestens einen Roboter mit einem Roboter-Endeffektor, der innerhalb des aseptischen Isolators angeordnet ist; und
- eine Steuerung, die derart ausgebildet ist, dass die folgenden Schritte ausgeführt werden:
- robotergestütztes Aufnehmen des Nadelträgers, über die Aufnahme, wobei der Nadelträger die Anzahl von Füllnadeln trägt;
- robotergestütztes Transferieren des Nadelträgers mit der Anzahl von Füllnadeln in die Füllposition in dem Isolator; und
- robotergestütztes Anordnen des Nadelträgers in der Füllposition innerhalb des aseptischen Isolators, wobei der in der Füllposition angeordnete Nadelträger in der Füllstation ist, in der die Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

Der zumindest eine Roboter gemäß dem zweiten Beispiel weist eine, insbesondere gelenkige, Trägerstruktur auf, an deren Ende ein Roboter-Endeffektor angeordnet ist. Die Trägerstruktur ist dazu ausgebildet, den Roboter-Endeffektor in allen drei Raumrichtungen zu bewegen.

Gemäß einem dritten Beispiel wird ein Computerprogramm mit einem Programmcode vorgeschlagen, der dazu ausgebildet ist, wenn er in der Steuerung des Transfersystems gemäß dem fünften Aspekt der Erfindung ausgeführt wird, die folgenden Schritte auszuführen:
- robotergestütztes Aufnehmen des Nadelträgers, über die Aufnahme, wobei der Nadelträger die Anzahl von Füllnadeln trägt;
- robotergestütztes Transferieren des Nadelträgers mit der Anzahl von Füllnadeln in die Füllposition in dem Isolator; und
- robotergestütztes Anordnen des Nadelträgers in der Füllposition innerhalb des aseptischen Isolators, wobei der in der Füllposition angeordnete Nadelträger in einer Füllstation ist, in der eine Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

Gemäß einem vierten Beispiel wird ein Verfahren zum Transferieren einer Anzahl von Füllnadeln aus einer Füllposition in einem Isolator, insbesondere einem aseptischen Isolator, der eine Transferschleuse aufweist, vorgeschlagen, wobei das Verfahren die folgenden Schritte aufweist:
- Bereitstellen eines Nadelträgers in der Füllposition, wobei der Nadelträger einen Grundkörper zum Tragen der Anzahl von Füllnadeln und eine Aufnahme aufweist;
- robotergestütztes Aufnehmen des Nadelträgers über die Aufnahme, wobei der Nadelträger die Anzahl von Füllnadeln trägt;
- robotergestütztes Entnehmen des Nadelträgers aus der Füllposition innerhalb des Isolators; und
- robotergestütztes Transferieren des Nadelträgers mit der Anzahl von Füllnadeln aus der Füllposition;
   wobei der in der Füllposition angeordnete Nadelträger in einer Füllstation ist, in der eine Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

Gemäß einem fünften Beispiel wird ein Transfersystem zum Transferieren einer Anzahl von Füllnadeln aus einer Füllposition in einem Isolator, insbesondere einem aseptischen Isolator, vorgeschlagen, wobei das Transfersystem aufweist:
- den Isolator, der eine Transferschleuse aufweist;
- einen Nadelträger, wobei der Nadelträger einen Grundkörper zum Tragen der Anzahl von Füllnadeln und eine Aufnahme aufweist;
- mindestens einen Roboter mit einem Roboter-Endeffektor, der innerhalb des Isolators angeordnet ist; und
- eine Steuerung, die derart ausgebildet ist, dass die folgenden Schritte ausgeführt werden:
- robotergestütztes Aufnehmen des Nadelträgers über die Aufnahme, wobei der Nadelträger die Anzahl von Füllnadeln trägt;
- robotergestütztes Entnehmen des Nadelträgers aus der Füllposition innerhalb des Isolators.
- robotergestütztes Transferieren des Nadelträgers mit der Anzahl von Füllnadeln aus der Füllposition;
   wobei der in der Füllposition angeordnete Nadelträger in einer Füllstation ist, in der eine Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

Gemäß einem sechsten Beispiel wird ein Computerprogramm mit einem Programmcode vorgeschlagen, der dazu ausgebildet ist, wenn er in der Steuerung des Transfersystems gemäß dem elften Aspekt der Erfindung ausgeführt wird, die folgenden Schritte auszuführen:
- robotergestütztes Aufnehmen des Nadelträgers über die Aufnahme, wobei der Nadelträger die Anzahl von Füllnadeln trägt;
- robotergestütztes Entnehmen des Nadelträgers aus der Füllposition innerhalb des Isolators.
- robotergestütztes Transferieren des Nadelträgers mit der Anzahl von Füllnadeln aus der Füllposition;
   wobei der in der Füllposition angeordnete Nadelträger in der Füllstation ist, in der die Anzahl von Objekten mittels der Anzahl von Füllnadeln mit einem Fluid, insbesondere einem pharmazeutischen oder einem kosmetischen Fluid, befüllt wird, und wobei der Nadelträger während des Befüllens der Anzahl von Objekten in der Füllstation direkt gehalten ist.

In einer weiteren Ausgestaltung des Verfahrens gemäß dem ersten oder vierten Beispiel kann vorgesehen sein, dass die Anzahl von Füllnadeln mittels einer Anzahl von Schläuchen in Fluidkommunikation mit einem Quellbehälter und/oder einem Fördermittel zum Fördern des Fluides ist.

Ein Vorteil dieser Ausgestaltung ist, dass eine derartige Füllnadel eine größere Fluidmenge in den aseptischen Isolator verbringen kann, als dies beispielsweise durch eine Füllnadel ohne Schlauch (z.B. eine herkömmliche Spritze) möglich wäre. Zwischen der Anzahl von Füllnadeln und dem Quellbehälter ist vorzugsweise ein Fördermittel (z.B. mindestens eine Pumpe) zum Fördern des Fluides angeordnet. Dabei kann es sich beispielsweise um eine Peristaltikpumpe, eine Rotationskolbenpumpe oder dergleichen handeln.

In einer weiteren Ausgestaltung des Verfahrens gemäß dem ersten oder vierten Beispiel kann vorgesehen sein, dass die Anzahl von Schläuchen eine Wand der Schleuse steril durchquert.

In einer weiteren Ausgestaltung des Verfahrens gemäß dem ersten oder vierten Beispiel kann vorgesehen sein, dass die Anzahl von Füllnadeln eine einzige Füllnadel ist. Es kann auch vorgesehen sein, dass die Anzahl von Füllnadeln zwei Füllnadeln ist. Die Anzahl von Füllnadeln kann auch von mehr Füllnadeln gebildet werden. Beispielsweise kann die Anzahl von Füllnadeln von drei, vier, fünf oder sechs Füllnadeln gebildet werden.

In einer Ausgestaltung des Transfersystems gemäß dem zweiten oder fünften Beispiel kann vorgesehen sein, dass sich der aseptische Isolator und die Transferschleuse einen gemeinsamen Wandabschnitt teilen und sich eine Öffnung durch die gemeinsame Wand erstreckt, wobei eine Tür die Öffnung lösbar verriegelt.

In einer Ausgestaltung des Transfersystems gemäß dem zweiten oder fünften Beispiel kann vorgesehen sein, dass die Anzahl von Füllnadeln mittels einer Anzahl von Schläuchen in Fluidkommunikation mit einem Quellbehälter und/oder einem Fördermittel zum Fördern des Fluides ist.

Ein Vorteil dieser Ausgestaltung ist, dass eine derartige Füllnadel eine größere Fluidmenge in den aseptischen Isolator verbringen kann, als dies beispielsweise durch eine Füllnadel ohne Schlauch (z.B. eine herkömmliche Spritze) möglich wäre. Zwischen der Anzahl von Füllnadeln und dem Quellbehälter ist vorzugsweise ein Fördermittel (z.B. mindestens eine Pumpe) zum Fördern des Fluides angeordnet. Dabei kann es sich beispielsweise um eine Peristaltikpumpe, eine Rotationskolbenpumpe oder dergleichen handeln.

Es versteht sich von selbst, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1: eine schematische Darstellung einer ersten Ausführungsform eines Transfersystems gemäß einem zweiten Aspekt der Erfindung,
- Fig. 2: eine schematische Darstellung einer zweiten Ausführungsform des Transfersystems gemäß dem zweiten Aspekt der Erfindung,
- Fig. 3: eine schematische Darstellung einer dritten Ausführungsform des Transfersystems gemäß dem zweiten Aspekt der Erfindung,
- Fig. 4: eine schematische Darstellung einer Ausführungsform des Transfersystems gemäß einem zweiten Beispiel,
- Fig. 5A: eine isometrische Darstellung einer Ausgestaltung eines erfindungsgemäßen Roboter-Endeffektors, der eine Anzahl von Füllnadeln direkt ergreift,
- Fig. 5B: eine isometrische Darstellung einer Ausgestaltung eines erfindungsgemäßen Roboter-Endeffektors, der einen Nadelträger ergreift,
- Fig. 6: eine isometrische Darstellung einer Ausgestaltung eines erfindungsgemäßen Nadelträgers in einer beispielhaften Transferschleuse,

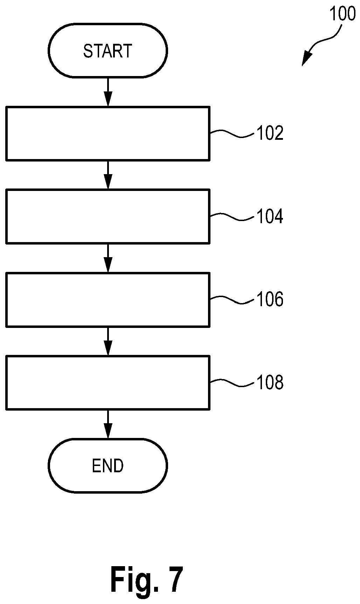

- Fig. 7: eine schematische Darstellung einer ersten Ausführungsform des Verfahrens gemäß dem ersten Aspekt der Erfindung,

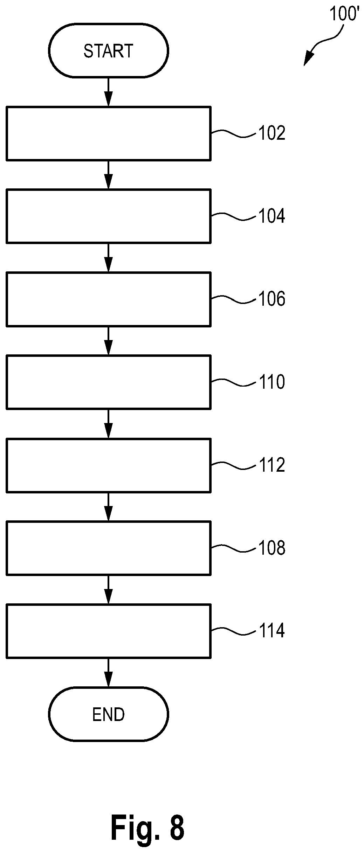

- Fig. 8: eine schematische Darstellung einer zweiten Ausführungsform des Verfahrens gemäß dem ersten Aspekt der Erfindung,

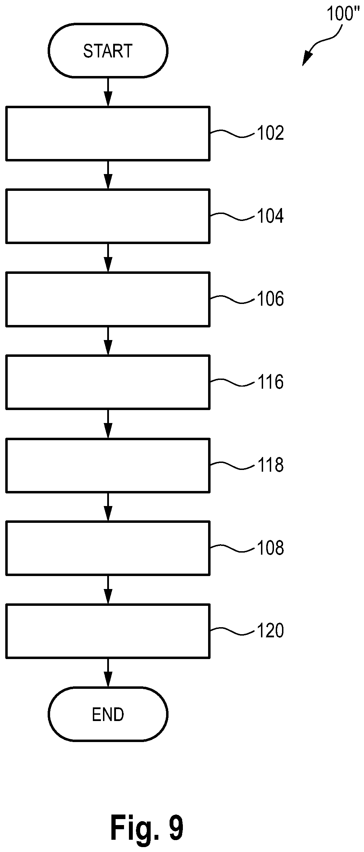

- Fig. 9: eine schematische Darstellung einer dritten Ausführungsform des Verfahrens gemäß dem ersten Aspekt der Erfindung,

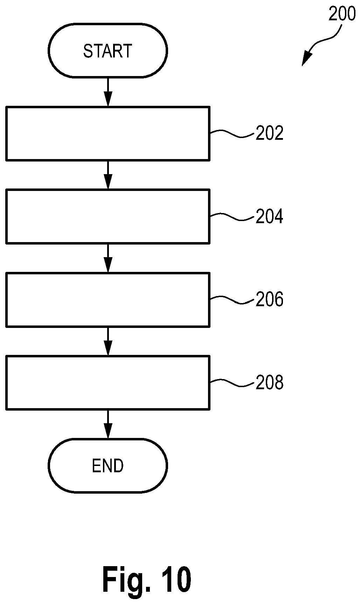

- Fig. 10: eine schematische Darstellung eines Verfahrens gemäß einem ersten Beispiel,
- Fig. 11: eine schematische Darstellung eines Verfahrens gemäß einem vierten Aspekt der Erfindung.
- Fig. 12: eine schematische Darstellung eines Verfahrens gemäß einem vierten Beispiel.

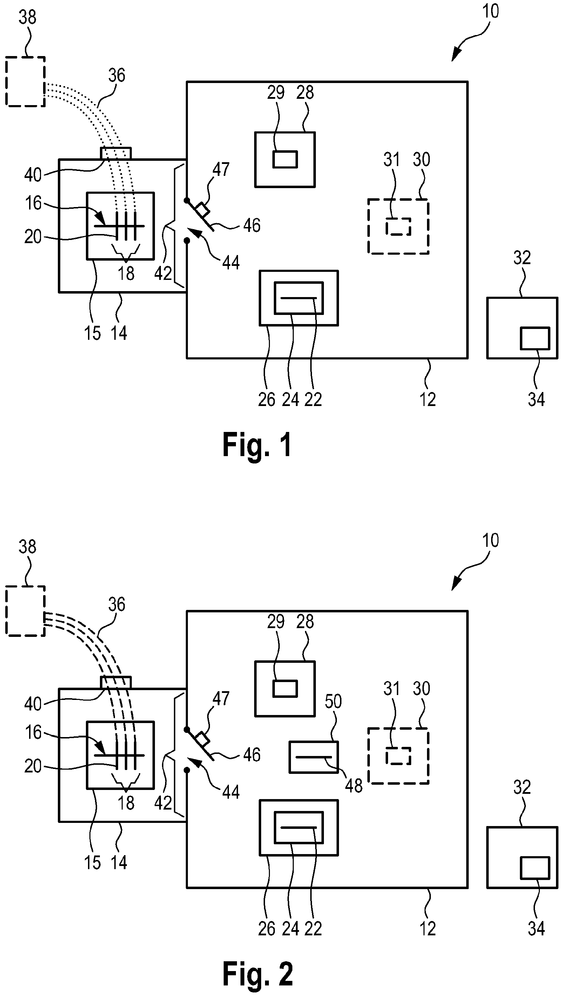

Fig. 1 zeigt eine schematische Darstellung 10 einer ersten Ausführungsform eines Transfersystems 10 gemäß einem zweiten Aspekt der Erfindung.

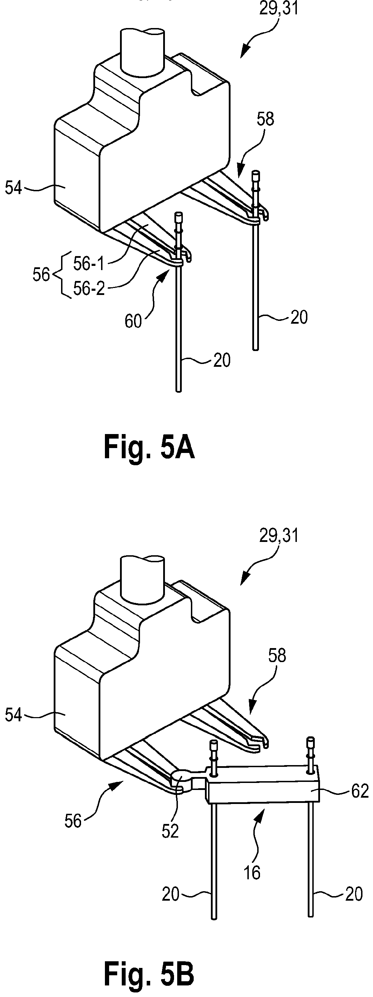

Das Transfersystem 10 der ersten Ausführungsform weist einen Isolator 12, insbesondere einen aseptischen Isolator 12, mit einer Transferschleuse 14 auf. Innerhalb der Transferschleuse 14 ist ein erster Nadelträger 16 anordenbar, der eine Anzahl von Füllnadeln 18 trägt, wobei vorzugsweise zumindest eine Füllnadel 20 der Anzahl von Füllnadeln 18 eine kreiszylindrische Form aufweist (siehe auch Fig. 5A und Fig. 5B). Eine Füllnadelform ist jedoch nicht auf kreiszylindrische Formen beschränkt. Alternativ sind auch weitere gängige Füllnadelformen (z.B. dreieckige, elliptische, mehreckige Formen oder dergleichen) möglich.

Darüber hinaus ist ein zweiter Nadelträger 22 in einer ersten Position 24 innerhalb des aseptischen Isolators 12 anordenbar. Der zweite Nadelträger 22 ist vorzugsweise in einer Füllstation 26 angeordnet, in der Objekte bzw. Endbehälter (z.B. Vials, Karpulen, Fläschchen, Spritzen und/oder dergleichen) mittels der zumindest einen Füllnadel 20 der Anzahl von Füllnadeln 18 mit einem Fluid, insbesondere einem pharmazeutischen oder einem kosmetischen Fluid, befüllt werden können.

Des Weiteren weist das Transfersystem 10 der ersten Ausführungsform zumindest einen Roboter 28 mit zumindest einem Roboter-Endeffektor 29 auf. Der zumindest eine Roboter 28 weist eine, insbesondere gelenkige, Trägerstruktur (nicht dargestellt) auf, an deren Ende ein Roboter-Endeffektor angeordnet ist. Die Trägerstruktur ist dazu ausgebildet, den Roboter-Endeffektor in allen drei Raumrichtungen zu bewegen. Alternativ können auch zwei oder mehr, vorzugsweise identische, Roboter 28 innerhalb des Isolators 12 angeordnet sein. Beispielsweise kann ein erster Roboter 28 mit zumindest einem ersten Roboter-Endeffektor 29 näher an der Transferschleuse 14 angeordnet sein, wohingegen ein optionaler zweiter Roboter 30 mit zumindest einem zweiten Roboter-Endeffektor 31 näher an dem zweiten Nadelträger 22 (bzw. der Füllstation 26) angeordnet sein kann. Der Roboter-Endeffektor 29 ist ausgebildet zum direkten Halten zumindest einer Füllnadel. Wie eingangs erwähnt, kann die zumindest eine Füllnadel beispielsweise mechanisch, insbesondere formschlüssig oder kraftschlüssig, oder magnetisch gehalten werden. Beispielsweise kann die zumindest eine Füllnadel mittels einer lösbaren Clip-Verbindung robotergestützt gehalten werden. Der Roboter-Endeffektor 29 weist vorzugsweise einen oder mehrere Greifer 56, 58 auf, die ein gezieltes Ergreifen zumindest einer Füllnadel 20 erlauben (beispielhaft dargestellt in Fig. 5A). Darüber hinaus ist der zumindest eine Roboter 28 durch eine Steuerung 32, die ein Computerprogramm 34 mit einem Programmcode aufweist, ansteuerbar. In Fig. 1 ist die Steuerung 32 als eigenständige, separate Einheit dargestellt. Alternativ kann die Steuerung 32 jedoch auch in den aseptischen Isolator 12 integriert werden.

Optional kann die Anzahl von Füllnadeln 18 mittels einer Anzahl von Schläuchen 36 in Fluidkommunikation mit einem Quellbehälter 38 sein, der vorzugsweise ein pharmazeutisches oder kosmetisches Fluid enthält. Um die keimfreie Umgebung innerhalb des aseptischen Isolators 12 aufrecht zu erhalten, ist die Transferschleuse 14 vorzugsweise derart ausgebildet, dass die Anzahl von Schläuchen 36 eine Wand 40 der Transferschleuse 14 steril durchquert, beispielsweise durch entsprechende Versiegelungsmittel. Zwischen der Anzahl von Füllnadeln und dem Quellbehälter ist vorzugsweise ein Fördermittel (z.B. mindestens eine Pumpe) zum Fördern des Fluides angeordnet. Dabei kann es sich beispielsweise um eine Peristaltikpumpe, eine Rotationskolbenpumpe oder dergleichen handeln.

Wie in Fig. 1 dargestellt, teilen sich der aseptische Isolator 12 und die Transferschleuse 14 einen gemeinsamen Wandabschnitt 42. Durch den gemeinsamen Wandabschnitt 42 erstreckt sich eine Öffnung 44, die dem eingangs erläuterten Alpha-Port entspricht. Des Weiteren weist der aseptische Isolator 42 eine Tür 46 auf, die dazu ausgebildet ist, die Öffnung 44 lösbar zu verriegeln. In Fig. 1 ist die Tür 46 beispielhaft schwenkbar dargestellt. Alternativ kann die Tür 46 jedoch auch als Schiebetür ausgebildet sein, die eine platzsparende Alternative zu der Schwenktür darstellt. Durch einen derartigen Alpha-Beta-Port kann das erfindungsgemäße Transferieren der zumindest einen Füllnadel 20 der Anzahl von Füllnadeln 18 in den aseptischen Isolator 12 unter Beibehaltung einer keimfreien Umgebung innerhalb der Transferschleuse 14 und innerhalb des aseptischen Isolators 12 erfolgen. Das Öffnen bzw. Schließen der Tür 46 kann vorzugsweise mittels des Roboter-Endeffektors 29 erfolgen. Optional können zu diesem Zweck auch Handschuhdurchführungen (nicht dargestellt in dem aseptischen Isolator 12 vorgesehen sein.

In dem Transfersystem 10 der ersten Ausführungsform kann ein Verfahren 100 gemäß einer ersten Ausführungsform des ersten Aspekts der Erfindung ausgeführt werden.

In einem ersten Schritt 102 des Verfahrens 100 wird der erste Nadelträger 16, der die Anzahl von Füllnadeln 18 trägt, innerhalb der Transferschleuse 14 bereitgestellt. Die Anzahl von Füllnadeln 18 ist dabei in dem ersten Nadelträger 16 angeordnet. Der erste Nadelträger 16 mitsamt der darin angeordneten Anzahl von Füllnadeln 18 wird in der Transferschleuse 14, der z.B. als Sterilbeutel oder als starrer Transportbehälter ausgebildet ist, angeordnet, bevor die Transferschleuse 14 mit dem Alpha-Port des aseptischen Isolators 14 steril gekoppelt wird. Die Anzahl von Füllnadeln 18 kann dabei in einer regelmäßigen oder unregelmäßigen Anordnung in dem ersten Nadelträger 16 angeordnet sein. Eine regelmäßige Anordnung kann beispielsweise eine lineare, regelmäßige Anordnung (z.B. in Form einer Matrix) oder eine kreisförmige, regelmäßige Anordnung (z.B. in Form eines Kreismusters) sein.

In einem weiteren Schritt 104 wird der zweite Nadelträger 22 in der ersten Position 24 innerhalb des aseptischen Isolators 12 bereitgestellt. Der zweite Nadelträger 22 wird dabei vorzugsweise vorsterilisiert in den aseptischen Isolator 12 eingebracht und entsprechend robotergestützt oder manuell in der ersten Position 24 angeordnet. Der zweite Nadelträger 22 kann beispielsweise über die Öffnung 44 steril in den aseptischen Isolator 12 eingeschleust werden.

Des Weiteren weist der zweite Nadelträger 22 Aufnahmen (z.B. Durchgangslöcher) zum Tragen von zumindest einer Füllnadel 20 auf. Derartige Aufnahmen können beispielsweise identisch zu den Aufnahmen des ersten Nadelträgers 16 sein, so dass beispielsweise Füllnadelabstände und/oder eine Füllnadelanordnung des ersten Nadelträgers 16 und des zweiten Nadelträgers 22 identisch sind. Alternativ können die Aufnahmen des Nadelträgers 16 und die des Nadelträgers 22 sich unterscheiden. Es ist beispielsweise auch möglich, dass der erste Nadelträger 16 mehr Füllnadeln tragen kann als zweite Nadelträger 22.

In einem weiteren Schritt 106 wird zumindest eine Füllnadel 20 der Anzahl von Füllnadeln 18 von dem ersten Nadelträger 16 zu dem zweiten Nadelträger 22 robotergestützt transferiert.

In einer bevorzugten Ausführungsform erfolgt der Schritt 106 derart, dass der Roboter-Endeffektor 29 die zumindest eine Füllnadel 20 der Anzahl von Füllnadeln 18 gesamthaft bzw. gleichzeitig aus dem ersten Nadelträger 16 entnimmt und zu dem zweiten Nadelträger 22 transferiert. Die zumindest eine Füllnadel 20 wird dabei direkt ergriffen und aus dem ersten Nadelträger entnommen. Das gesamthafte Transferieren der zumindest einen Füllnadel 20 erweist sich insbesondere dann als vorteilhaft, wenn der erste Nadelträger 16 und der zweite Nadelträger 22 im Wesentlichen identisch sind, d.h. gleiche Füllnadelabstände und die gleiche Füllnadelanordnung aufweisen.

In einer alternativen bevorzugten Ausführungsform erfolgt der Schritt 106 derart, dass der Roboter-Endeffektor 29 die zumindest eine Füllnadel 20 der Anzahl von Füllnadeln 18 einzeln entnimmt und zu dem zweiten Nadelträger 22 transferiert. Die zumindest eine Füllnadel 20 ist dabei direkt mittels des Roboter-Endeffektors 29 gehalten. Das einzelne Transferieren der zumindest einen Füllnadel 20 erweist sich insbesondere dann als vorteilhaft, wenn der erste Nadelträger 16 und der zweite Nadelträger 22 sich hinsichtlich der Füllnadelabstände und/oder der Füllnadelanordnung unterscheiden.

In einem optionalen Schritt, der vorzugsweise vor dem ersten Schritt 106 ausgeführt wird, kann das Öffnen der Transferschleuse 14 robotergestützt, d.h. mittels des Roboter-Endeffektors 29, erfolgen. Zu diesem Zweck kann die Tür 46 beispielsweise eine, insbesondere kreiszylindrisch ausgebildete, Gegenaufnahme 47 aufweisen, die mit dem Roboter-Endeffektor 29 ergriffen oder anderweitig erfasst werden kann. Hierdurch kann der Automatisierungsgrad des Verfahrens 100 weiter erhöht werden.

In einem weiteren Schritt 108 wird die zumindest eine Füllnadel 20 in dem zweiten Nadelträger 22 robotergestützt angeordnet. Die zumindest eine Füllnadel 20 der Anzahl von Füllnadeln 18 ist währenddessen direkt mittels des Roboter-Endeffektors 29 gehalten. Wie bereits erwähnt, kann der Nadelträger 22 in der ersten Position 24 in einer Füllstation 26 sein, in der Objekte mittels der zumindest einen Füllnadel 20 der Anzahl von Füllnadeln 18 mit einem Fluid, insbesondere einem pharmazeutischen oder einem kosmetischen Fluid, befüllt werden. In diesem Fall werden die Objekte vorzugsweise direkt unterhalb der zumindest einen Füllnadel 20 positioniert.

Fig. 2 zeigt eine schematische Darstellung einer zweiten Ausführungsform des Transfersystems 10 gemäß dem zweiten Aspekt der Erfindung.

Das Transfersystem 10 der zweiten Ausführungsform entspricht im Wesentlichen dem Transfersystem 10 der ersten Ausführungsform. Gleiche Elemente sind mit gleichen Bezugszeichen gekennzeichnet und werden nicht näher erläutert. Das Transfersystem 10 der zweiten Ausführungsform unterscheidet sich von dem Transfersystem 10 der ersten Ausführungsform durch einen dritten Nadelträger 48, der in einer zweiten Position 50 innerhalb des aseptischen Isolators 12 anordenbar ist. Die zweite Position 50 ist von der ersten Position 24 beabstandet. Der dritte Nadelträger 48 ist vorzugsweise ein Zwischenträger, in dem die zumindest eine Füllnadel 20 getragen wird, bevor sie in den zweiten Nadelträger 22 transferiert wird.

In dem Transfersystem 10 der zweiten Ausführungsform kann ein Verfahren 100' gemäß einer zweiten Ausführungsform des ersten Aspekts der Erfindung ausgeführt werden.

In einem ersten Schritt 102 des Verfahrens 100' wird der erste Nadelträger 16, der die Anzahl von Füllnadeln 18 trägt, innerhalb der Transferschleuse 14 bereitgestellt. Die Anzahl von Füllnadeln 18 ist dabei in dem ersten Nadelträger 16 angeordnet. Der erste Nadelträger 16 mitsamt der darin angeordneten Anzahl von Füllnadeln 18 wird in der Transferschleuse 14, der z.B. als Sterilbeutel oder als starrer Transportbehälter ausgebildet ist, angeordnet, bevor die Transferschleuse 14 mit dem Alpha-Port des aseptischen Isolators 14 steril gekoppelt wird. Die Anzahl von Füllnadeln 18 kann dabei in einer regelmäßigen oder unregelmäßigen Anordnung in dem ersten Nadelträger 16 angeordnet sein. Eine regelmäßige Anordnung kann beispielsweise eine lineare, regelmäßige Anordnung (z.B. in Form einer Matrix) oder eine kreisförmige, regelmäßige Anordnung (z.B. in Form eines Kreismusters) sein.

In einem weiteren Schritt 104 wird der zweite Nadelträger 22 in der ersten Position 24 innerhalb des aseptischen Isolators 12 bereitgestellt. Der zweite Nadelträger 22 wird dabei vorzugsweise vorsterilisiert in den aseptischen Isolator 12 eingebracht und entsprechend robotergestützt oder manuell in der ersten Position 24 angeordnet. Der zweite Nadelträger 22 kann beispielsweise über die Öffnung 44 steril in den aseptischen Isolator 12 eingeschleust werden.

Des Weiteren weist der zweite Nadelträger 22 Aufnahmen (z.B. Durchgangslöcher) zum Tragen von zumindest einer Füllnadel 20 auf. Derartige Aufnahmen können beispielsweise identisch zu den Aufnahmen des ersten Nadelträgers 16 sein, so dass beispielsweise Füllnadelabstände und/oder eine Füllnadelanordnung des ersten Nadelträgers 16 und des zweiten Nadelträgers 22 identisch sind. Alternativ können die Aufnahmen des Nadelträgers 16 und des Nadelträgers 22 sich unterscheiden. Es ist beispielsweise auch möglich, dass der erste Nadelträger 16 mehr Füllnadeln tragen kann als zweite Nadelträger 22.

In einem weiteren Schritt 106 des Verfahrens 100' wird zumindest eine Füllnadel 20 der Anzahl von Füllnadeln 18 von dem ersten Nadelträger 16 zu dem zweiten Nadelträger 22 robotergestützt transferiert.

Dabei wird in einem ersten Schritt 110 die zumindest eine Füllnadel 20 der Anzahl von Füllnadeln 18 zunächst von dem ersten Nadelträger 16 zu dem dritten Nadelträger 48 robotergestützt transferiert. Die zumindest eine Füllnadel 20 ist dabei direkt mittels des Roboter-Endeffektors gehalten und kann entweder gesamthaft oder einzeln von dem ersten Nadelträger 16 zu dem dritten Nadelträger 48 transferiert werden. In einem weiteren Schritt 112 wird die in Schritt 110 ergriffene, zumindest eine Füllnadel 20 der Anzahl von Füllnadeln 18 in dem dritten Nadelträger 48 robotergestützt angeordnet.

In einem weiteren Schritt 108 wird die zumindest eine Füllnadel 20 in dem zweiten Nadelträger 22 robotergestützt angeordnet. Die zumindest eine Füllnadel 20 der Anzahl von Füllnadeln 18 ist währenddessen direkt mittels des Roboter-Endeffektors 29 gehalten. Wie bereits erwähnt, kann der Nadelträger 22 in der ersten Position 24 in einer Füllstation 26 sein, in der Objekte mittels der zumindest einen Füllnadel 20 der Anzahl von Füllnadeln 18 mit einem Fluid, insbesondere einem pharmazeutischen oder einem kosmetischen Fluid, befüllt werden. In diesem Fall werden die Objekte vorzugsweise direkt unterhalb der zumindest einen Füllnadel 20 positioniert.

Der Schritt 108 erfolgt mittels eines zweiten robotergestützten Transferierens 114 der zumindest einen Füllnadel 20 der Anzahl von Füllnadeln 18 von dem dritten Nadelträger 48 zu dem zweiten Nadelträger 22, wobei die zumindest eine Füllnadel 20 der Anzahl von Füllnadeln 18 während des zweiten robotergestützten Transferierens 114 direkt gehalten ist.

Wenn die zumindest eine Füllnadel 20 der Anzahl von Füllnadeln 18 gesamthaft von dem ersten Nadelträger 16 zu dem dritten Nadelträger 48 transferiert wird, wird die zumindest eine Füllnadel 20 der Anzahl von Füllnadeln 18 jeweils einzeln von dem dritten Nadelträger 48 zu dem zweiten Nadelträger 22 transferiert. Diese Ausgestaltung ist beispielsweise dann vorteilhaft, wenn der erste Nadelträger 16 und der dritte Nadelträger 48 im Wesentlichen identisch sind, wobei der dritte Nadelträger 48 und der zweite Nadelträger 22 sich hinsichtlich der Füllnadelabstände und/oder der Füllnadelanordnung unterscheiden.

Wenn die zumindest eine Füllnadel 20 der Anzahl von Füllnadeln 18 hingegen jeweils einzeln von dem ersten Nadelträger 16 zu dem dritten Nadelträger 48 transferiert wird, wird die zumindest eine Füllnadel 20 der Anzahl von Füllnadeln 18 gesamthaft von dem dritten Nadelträger 48 zu dem zweiten Nadelträger 22 transferiert. Diese Ausgestaltung ist beispielsweise dann vorteilhaft, wenn der dritte Nadelträger 48 und der zweite Nadelträger 22 sich hinsichtlich der Füllnadelabstände und/oder der Füllnadelanordnung nicht unterscheiden (d.h. im Wesentlichen identisch sind), wobei der erste Nadelträger 16 und der dritte Nadelträger 48 sich hinsichtlich der Füllnadelabstände und/oder der Füllnadelanordnung unterscheiden.

In einem optionalen Schritt, der vorzugsweise vor dem ersten Schritt 106 ausgeführt wird, kann das Öffnen der Transferschleuse 14 robotergestützt, d.h. mittels des Roboter-Endeffektors 29, erfolgen. Zu diesem Zweck kann die Tür 46 beispielsweise eine, insbesondere kreiszylindrisch geformte, Gegenaufnahme 47 aufweisen, die mit dem Roboter-Endeffektor 29 ergriffen oder anderweitig erfasst werden kann. Hierdurch kann der Automatisierungsgrad des Verfahrens 100 weiter erhöht werden.

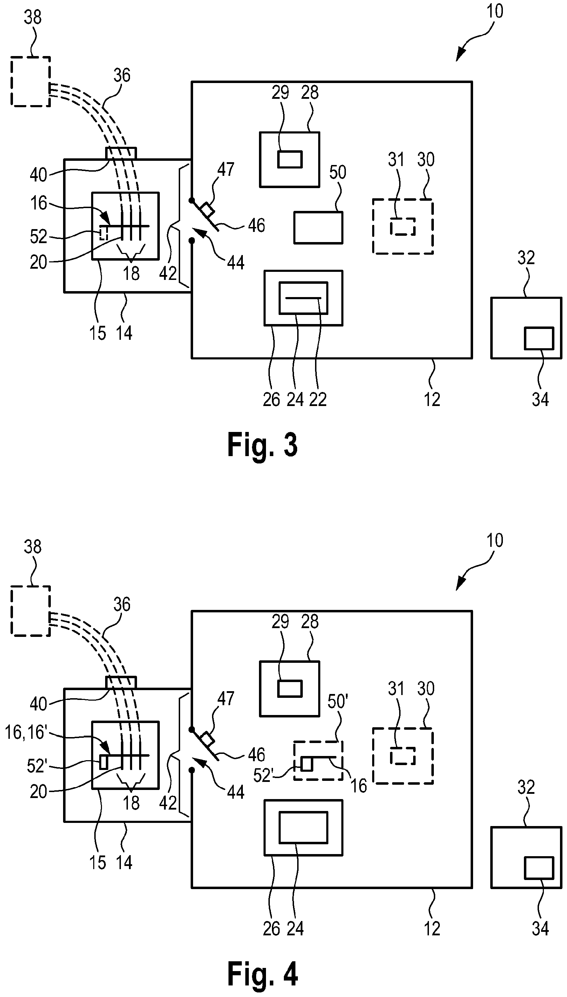

Fig. 3 zeigt eine schematische Darstellung einer dritten Ausführungsform des Transfersystems 10 gemäß dem zweiten Aspekt der Erfindung.

Das Transfersystem 10 der dritten Ausführungsform entspricht im Wesentlichen dem Transfersystem 10 der ersten Ausführungsform. Gleiche Elemente sind mit gleichen Bezugszeichen gekennzeichnet und werden nicht näher erläutert. Das Transfersystem 10 der dritten Ausführungsform unterscheidet sich von dem Transfersystem 10 der ersten Ausführungsform durch die optionale Ausgestaltung des ersten Nadelträgers 16.

Im Unterschied zu dem Transfersystem 10 der ersten Ausführungsform kann der erste Nadelträger 16 gemäß dem Transfersystem 10 der dritten Ausführungsform (optional) mindestens einen Vorsprung 52 aufweisen. Der mindestens eine Vorsprung 52 erstreckt sich vorzugsweise von einem Grundkörper 62 des ersten Nadelträgers 16. Jeder von dem mindestens einen Vorsprung 52 ist derart geformt, dass ein Roboter-Greifer 56 (beispielhaft dargestellt in Fig. 5A und 5B) eines Roboter-Endeffektors 29, der dazu ausgebildet ist, eine einzige Füllnadel 20 der Anzahl von Füllnadeln 18 oder ein mittels der einen einzigen Füllnadel 20 der Anzahl von Füllnadeln 18 zu befüllendes Objekt, insbesondere ein pharmazeutisches oder kosmetisches Objekt, aufzunehmen bzw. zu halten, ihn aufnehmen bzw. halten kann. Jeder von dem mindestens einen Vorsprung 52 kann beispielsweise eine kreiszylindrische Form aufweisen. Die Form des Vorsprungs ist jedoch nicht auf kreiszylindrische Formen beschränkt. Auch andere Formen (z.B. prismatisch bzw. dreieckig, rechteckig bzw. quaderförmig oder dergleichen) sind möglich. Es versteht sich von selbst, dass der Roboter-Endeffektor 29 beispielsweise mehrere Greifer 56, 58 aufweisen kann, von denen jeder "eine einzige" Füllnadel 20 der Anzahl von Füllnadeln 18 ergreifen kann (z.B. dargestellt in Fig. 5A).

Alternativ kann der erste Nadelträger 16 jedoch auch ohne einen derartigen Vorsprung 52 ausgebildet sein.

In dem Transfersystem 10 der dritten Ausführungsform kann ein Verfahren 100" gemäß einer dritten Ausführungsform des ersten Aspekts der Erfindung ausgeführt werden.

In einem ersten Schritt 102 des Verfahrens 100" wird der erste Nadelträger 16, der die Anzahl von Füllnadeln 18 trägt, innerhalb der Transferschleuse 14 bereitgestellt. Die Anzahl von Füllnadeln 18 ist dabei in dem ersten Nadelträger 16 angeordnet. Der erste Nadelträger 16 mitsamt der darin angeordneten Anzahl von Füllnadeln 18 wird in der Transferschleuse 14, die z.B. als Sterilbeutel oder als starrer Transportbehälter ausgebildet ist, angeordnet, bevor die Transferschleuse 14 mit dem Alpha-Port des aseptischen Isolators 14 steril gekoppelt wird. Die Anzahl von Füllnadeln 18 kann dabei in einer regelmäßigen oder unregelmäßigen Anordnung in dem ersten Nadelträger 16 angeordnet sein. Eine regelmäßige Anordnung kann beispielsweise eine lineare, regelmäßige Anordnung (z.B. in Form einer Matrix) oder eine kreisförmige, regelmäßige Anordnung (z.B. in Form eines Kreismusters) sein.

In einem weiteren Schritt 104 wird der zweite Nadelträger 22 in der ersten Position 24 innerhalb des aseptischen Isolators 12 bereitgestellt. Der zweite Nadelträger 22 wird dabei vorzugsweise vorsterilisiert in den aseptischen Isolator 12 eingebracht und entsprechend robotergestützt oder manuell in der ersten Position 24 angeordnet. Der zweite Nadelträger 22 kann beispielsweise über die Öffnung 44 steril in den aseptischen Isolator 12 eingeschleust werden.

Des Weiteren weist der zweite Nadelträger 22 Aufnahmen (z.B. Durchgangslöcher) zum Tragen von zumindest einer Füllnadel 20 auf. Derartige Aufnahmen können beispielsweise identisch zu den Aufnahmen des ersten Nadelträgers 16 sein, so dass beispielsweise Füllnadelabstände und/oder eine Füllnadelanordnung des ersten Nadelträgers 16 und des zweiten Nadelträgers 22 identisch sind. Alternativ können die Aufnahmen des ersten Nadelträgers 16 und die des zweiten Nadelträgers 22 sich unterscheiden. Es ist auch möglich, dass der erste Nadelträger 16 mehr Füllnadeln tragen kann als zweite Nadelträger 22.

In einem weiteren Schritt 106 wird zumindest eine Füllnadel 20 der Anzahl von Füllnadeln 18 von dem ersten Nadelträger 16 zu dem zweiten Nadelträger 22 robotergestützt transferiert. Das Aufnehmen des Nadelträgers 16 kann dabei beispielsweise robotergestützt über den mindestens einen Vorsprung 52 erfolgen.

Dabei wird in einem ersten Schritt 116 der erste Nadelträger 16 mitsamt der Anzahl von Füllnadeln 18 von der Transferschleuse 14 in eine zweite Position 50 innerhalb des aseptischen Isolators 12 robotergestützt transferiert, wobei die zweite Position 50 von der ersten Position 22 beabstandet ist. In einem weiteren Schritt 118 wird der erste Nadelträger 16 aus Schritt 116 in der zweiten Position 50 angeordnet.

In einem weiteren Schritt 108 wird die zumindest eine Füllnadel 20 in dem zweiten Nadelträger 22 robotergestützt angeordnet. Die zumindest eine Füllnadel 20 der Anzahl von Füllnadeln 18 ist währenddessen direkt gehalten. Wie bereits erwähnt, kann der Nadelträger 22 in der ersten Position 24 in einer Füllstation 26 sein, in der Objekte mittels der zumindest einen Füllnadel 20 der Anzahl von Füllnadeln 18 mit einem Fluid, insbesondere einem pharmazeutischen oder einem kosmetischen Fluid, befüllt werden. In diesem Fall werden die Objekte vorzugsweise direkt unterhalb der zumindest einen Füllnadel 20 positioniert.

Der Schritt 108 erfolgt mittels eines zweiten robotergestützten Transferierens 120 der zumindest einen Füllnadel 20 der Anzahl von Füllnadeln 18 von dem ersten Nadelträger 16, der zu diesem Zeitpunkt in der Position 50 angeordnet ist, zu dem zweiten Nadelträger 22, wobei die zumindest eine Füllnadel 20 der Anzahl von Füllnadeln 18 während des zweiten robotergestützten Transferierens 120 direkt gehalten ist. Anders ausgedrückt, erfolgt der Schritt des zweiten Transferierens 120 ausgehend von dem in der zweiten Position 50 angeordneten ersten Nadelträger 16. Dabei kann die zumindest eine Füllnadel 20 der Anzahl von Füllnadeln 18 gesamthaft oder einzeln von dem in der zweiten Position 50 angeordneten ersten Nadelträger 16 zu dem zweiten Nadelträger 22 transferiert werden.

In einem optionalen Schritt, der vorzugsweise vor dem ersten Schritt 106 ausgeführt wird, kann das Öffnen der Transferschleuse 14 robotergestützt, d.h. mittels des Roboter-Endeffektors 29, erfolgen. Zu diesem Zweck kann die Tür 46 beispielsweise eine, insbesondere kreiszylindrisch geformte, Gegenaufnahme 47 aufweisen, die mit dem Roboter-Endeffektor 29 ergriffen oder anderweitig erfasst werden kann. Hierdurch kann der Automatisierungsgrad des Verfahrens 100 weiter erhöht werden.

Fig. 4 zeigt eine schematische Darstellung eines Transfersystems 10 gemäß einem zweiten Beispiel.

Das Transfersystem 10' gemäß dem zweiten Beispiel entspricht im Wesentlichen dem Transfersystem 10 der dritten Ausführungsform des zweiten Aspekts der Erfindung. Gleiche Elemente sind mit gleichen Bezugszeichen gekennzeichnet und werden nicht näher erläutert. Ein Unterschied zu dem Transfersystem 10 der dritten Ausführungsform des zweiten Aspekts ist, dass der Nadelträger 16 gemäß dem Transfersystem 10' eine Aufnahme 52' aufweist.

In der Ausführungsform des Transfersystems 10' kann ein Verfahren 200 gemäß einer Ausführungsform des ersten Beispiels der Erfindung ausgeführt werden.

In einem ersten Schritt 202 des Verfahrens 200 wird ein Nadelträger 16 bereitgestellt. Der Nadelträger 16 weist einen Grundkörper 62 zum Tragen einer Anzahl von Füllnadeln 18 auf. Die Anzahl von Füllnadeln 18 ist in dem Nadelträger 16, insbesondere in dem Grundkörper 62, anordenbar. Des Weiteren weist der Nadelträger eine Aufnahme 52' auf. Die Aufnahme 52' ist vorzugsweise mindestens ein Vorsprung, der sich von dem Grundkörper 62 aus erstreckt. Jeder Vorsprung von dem mindestens einen Vorsprung ist vorzugsweise derart geformt, dass der Roboter-Greifer 56, 58 des Roboter-Endeffektors 29,31, der ausgebildet ist zum Aufnehmen einer einzigen Füllnadel 20 oder eines mittels der einen einzigen Füllnadel 20 zu befüllenden Objekts, insbesondere eines pharmazeutischen oder kosmetischen Objekts, ihn aufnehmen kann.

In einem weiteren Schritt 204 wird der Nadelträger 16 über die Aufnahme 52' mittels des Roboter-Endeffektors 29, 31 aufgenommen. Während des Ausführens des Schrittes 204 trägt der Nadelträger 16 die Anzahl von Füllnadeln. Der Roboter-Endeffektor 29, 31 ist dazu ausgebildet, sowohl eine einzige Füllnadel 20 der Anzahl von Füllnadeln 18 oder ein mittels der einen einzigen Füllnadel 20 zu befüllendes Objekt, insbesondere ein pharmazeutisches oder kosmetisches Objekt, als auch den mindestens einen Vorsprung 52' aufzunehmen. Das Aufnehmen des Nadelträgers kann mechanisch, insbesondere formschlüssig oder kraftschlüssig, oder magnetisch durchgeführt werden. Beispielsweise kann die Aufnahme 52' des Nadelträgers 16 mittels einer lösbaren Clip-Verbindung robotergestützt aufgenommen werden. Alternativ kann die Aufnahme 52' auch mittels eines Robotergreifers ergriffen werden. Auch ist ein magnetisches Aufnehmen des Nadelträgers 16 über die Aufnahme 52' möglich.

In einem weiteren Schritt 206 wird der über die Aufnahme 52' aufgenommene Nadelträger 16 mitsamt der Anzahl von Füllnadeln 18 robotergestützt in eine Füllposition 24 in dem aseptischen Isolator 12 transferiert.

In einem weiteren Schritt 208 wird der Nadelträger 16 in der Füllposition 24 innerhalb des aseptischen Isolators 12 angeordnet. Der in der Füllposition 24 angeordnete Nadelträger 16 ist dabei vorzugsweise in einer Füllstation 26, in der eine Anzahl von Objekten mittels der zumindest einen Füllnadel 20 der Anzahl von Füllnadeln 18 mit einem Fluid, insbesondere einem pharmazeutischen oder einem kosmetischen Fluid, befüllt wird. In der Füllposition 24 ist vorzugsweise ein Träger zum Tragen des Nadelträgers 16 angeordnet, wobei eine Anzahl von zu befüllenden Objekten, insbesondere pharmazeutische oder kosmetische Objekten, vorzugsweise direkt unterhalb der Anzahl von Füllnadeln 18 positioniert und diesen zugeordnet ist. Alternativ kann der Nadelträger in der Füllstation 26 auch weiterhin in dem Roboter-Endeffektor 29, 31 verbleiben. Das bedeutet mit anderen Worten, dass der Nadelträger 16 während des Befüllens der Anzahl von Objekten in der Füllstation 26 direkt gehalten ist.

In einer Ausgestaltung wird der Nadelträger 16 mit der Anzahl von Füllnadeln 18 innerhalb der Transferschleuse 14 bereitgestellt. Das bedeutet mit anderen Worten, dass der Nadelträger 16 sich zunächst in der Transferschleuse 14 befindet. Ausgehend von der Transferschleuse 14 wird dieser über die Aufnahme 52' robotergestützt aufgenommen und in die Füllposition 24 transferiert.

In alternativen Ausgestaltung wird der Nadelträger 16 in einer von der Füllposition 24 beabstandeten Position 50' innerhalb des Isolators bereitgestellt. Bevor der Schritt 206 ausgeführt wird, wird ein Transferschleusen-Nadelträger 16' innerhalb der Transferschleuse 14 bereitgestellt. Der Transferschleusen-Nadelträger 16' trägt dabei zunächst die Anzahl von Füllnadeln 18. In einem weiteren Schritt, der ebenfalls vor dem Schritt 206 ausgeführt wird, wird die Anzahl von Füllnadeln 18 von dem Transferschleusen-Nadelträger 16' zu dem Nadelträger 16, der sich in der Position 50' befindet, robotergestützt transferiert. Dabei ist die Anzahl von Füllnadeln 18 direkt mittels eines Roboter-Endeffektors gehalten. In einem letzten Schritt, der vor dem Schritt 206 ausgeführt wird, wird die entnommene Anzahl von Füllnadeln 18 robotergestützt in dem Nadelträger 16 angeordnet. Dabei kann die Anzahl von Füllnadeln entweder einzeln oder gesamthaft von dem Transferschleusen-Nadelträger 16' zu dem Nadelträger 16 transferiert werden.

Während des robotergestützten Transferierens 206 kann der Nadelträger 16 mittels mehr als einem Roboter 28, 30 transferiert werden. Beispielsweise kann der Nadelträger 16 von einem Roboter 28 zu einem weiteren Roboter 30 übergeben werden.

In einem optionalen Schritt, der vorzugsweise vor dem Schritt 206 ausgeführt wird, kann das Öffnen der Transferschleuse 14 robotergestützt, d.h. mittels des Roboter-Endeffektors 29, 31 erfolgen. Zu diesem Zweck kann die Tür 46 beispielsweise eine, insbesondere kreiszylindrisch geformte, Gegenaufnahme 47 aufweisen, die mit dem Roboter-Endeffektor 29 ergriffen oder anderweitig erfasst werden kann. Die Gegenaufnahme 47 ist vorzugsweise kreiszylindrisch geformt. Hierdurch kann der Automatisierungsgrad des Verfahrens 100 weiter erhöht werden und eine Interaktion mit dem Roboter-Endeffektor 29, 31 weiter vereinfacht werden.

Die Fig. 5A und 5B zeigen eine isometrische Ansicht einer Ausgestaltung eines erfindungsgemäßen Roboter-Endeffektors 29, 31. Der Roboter-Endeffektor 29, 31 ist mittels einer, vorzugsweise gelenkigen, Trägerstruktur (nicht dargestellt) mit einem Roboter 28, 30 verbunden. Die Trägerstruktur ist dazu ausgebildet, den Roboter-Endeffektor in allen drei Raumrichtungen zu bewegen und kann zu diesem Zweck einen oder mehrere Gelenke aufweisen. Bei der Trägerstruktur kann es sich beispielsweise um eine Konstruktion mit Mehrachs-Bewegungen jeglicher Art handeln. Beispielsweise kann eine derartige Konstruktion Zwei- bis Sechsachsbewegungen jeglicher Art aufweisen.

Der Roboter-Endeffektor 29, 31 weist einen Hauptkörper 54, einen ersten Greifer 56 und einen zweiten Greifer 58 auf. Der Roboter-Endeffektor 29, 31 kann jedoch auch weniger oder mehr Greifer aufweisen. Beispielsweise kann der Roboter-Endeffektor 29, 31 nur einen Greifer 56 oder mehr als zwei Greifer 58 aufweisen. Um den Fertigungsaufwand und die Komplexität des Endeffektors 29, 31 zu minimieren, kann die Mehrzahl von Greifern 56, 58 identisch ausgebildet sein.

Der erste Greifer 56 weist einen ersten Schenkel 56-1 und einen zweiten Schenkel 56-2 auf, wobei der erste Schenkel 56-1 und der zweite Schenkel 56-2 relativ zueinander bewegbar sind. Der erste Greifer 56 erstreckt sich von dem Hauptkörper 54 aus und weist an einem Greifabschnitt 60 eine Aussparung auf. Die Aussparung ist derart ausgebildet, dass vorzugsweise kreiszylindrische oder schlauchförmige Elemente ergriffen werden können. Beispielsweise kann die Aussparung gekrümmt, eckig oder kreiszylindrisch geformt sein, um eine Zentrierung der kreiszylindrischen oder schlauchförmigen Elemente zu bewirken. Analoges gilt für den zweiten Greifer 58.

Der Roboter-Endeffektor 29, 31 ist vorzugsweise ausgebildet zum Ergreifen einer einzelnen Füllnadel 20, eines mittels der einzelnen Füllnadel 20 zu befüllenden Objekts (nicht dargestellt) und/oder eines Nadelträgers 16.

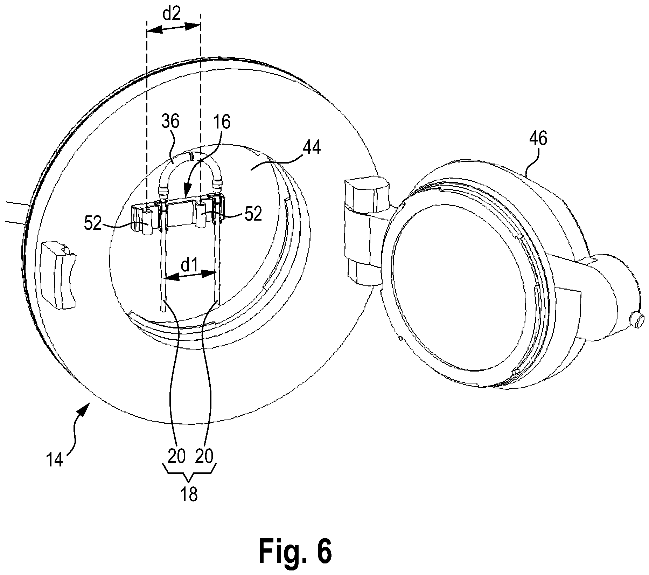

Fig. 6 zeigt eine isometrische Ansicht einer Ausgestaltung des erfindungsgemäßen Roboter-Endeffektors 29, 31, der beispielhaft mittels des ersten Greifers 56 einen Nadelträger 16 über die vorzugsweise kreiszylindrische Aufnahme 52 greift. Die Aufnahme 52 ist als Vorsprung ausgebildet, der sich von einem Grundkörper 62 des Nadelträgers 16 erstreckt. Der Vorsprung 52 ist derart geformt, dass ein Roboter-Endeffektor, der dazu ausgebildet ist, eine einzige Füllnadel der Anzahl von Füllnadeln oder ein mittels der einen einzigen Füllnadel zu befüllendes Objekt, insbesondere ein Objekt zum Aufnahmen eines pharmazeutischen oder kosmetischen Fluides oder Flüssigkeit, zu ergreifen, auch den Vorsprung ergreifen kann. In der Regel weisen derartige Objekte eine kreiszylindrische Form auf, so dass der zu ergreifende Querschnitt kreisförmig ist. Daher kann der Vorsprung 52 ebenfalls einen kreisförmigen Querschnitt aufweisen. Der Nadelträger 16 kann dann mit demselben Endeffektor 29, 31 ergriffen werden, mit dem auch die zumindest eine Nadel 20 selbst ergriffen werden kann. Ein Wechseln des Endeffektors 29, 31 kann daher vermieden werden, selbst wenn sich der Transfervorgang zum Transferieren des der zumindest einen Füllnadel 20 in den aseptischen Isolator 12 ändert. Der erfindungsgemäße Nadelträger ist jedoch nicht auf einen Vorsprung beschränkt. Alternativ kann der Nadelträger 16 beispielsweise zwei oder mehr derartige Vorsprünge aufweisen.

Fig. 6 zeigt eine isometrische Darstellung einer Ausgestaltung eines erfindungsgemäßen Nadelträgers 16 in einer Transferschleuse (nicht dargestellt), die vorliegend beispielhaft mit dem Alpha-Port des aseptischen Isolators gekoppelt ist. Der Alpha-Port weist eine Aussparung 44 und eine Tür 46 auf. Die Tür 46 ist derart (insbesondere schwenkbar) an dem Alpha-Port angebracht, dass die Öffnung 44 durch die Tür 46 lösbar verriegelt werden kann. Innerhalb der Transferschleuse 14 ist ein erfindungsgemäßer Nadelträger 16 bereitgestellt. Dieser trägt eine Anzahl von mit Schläuchen 36 versehenen Füllnadeln 18. Das Tragen der Anzahl von Füllnadeln kann dabei auf unterschiedliche Weise erfolgen. So kann der Nadelträger 16 beispielsweise zumindest ein Durchgangsloch zum Tragen zumindest einer Füllnadel 20 darin aufweisen. Grundsätzlich sind jedoch auch andere Verbindungsarten denkbar. Optional kann die zumindest eine Füllnadel 20 magnetisch in oder an dem Nadelträger 16 angeordnet sein. Es kann auch vorgesehen sein, dass die zumindest eine Füllnadel formschlüssig in oder an dem Nadelträger angeordnet ist (z.B. mittels einer Clip- oder Schnappverbindung).

Ein Unterschied zu dem in Fig. 5B dargestellten Nadelträger ist, dass der in Fig. 6 dargestellte Nadelträger 16 beispielhaft zwei Vorsprünge 52 aufweist. Die Anzahl von Vorsprüngen 52 kann jedoch auch mehr als zwei betragen. Hierdurch kann eine zusätzliche Verdrehsicherung des Nadelträgers gewährleistet werden, wenn dieser robotergestützt aufgenommen ist. Ein entsprechender Roboter-Endeffektor 29, 31 weist vorzugsweise eine der Anzahl von Vorsprüngen 52 entsprechende Zahl von Roboter-Greifern 56, 58 (Fig. 5A und 5B) auf, mittels deren die Anzahl von Vorsprüngen 52, insbesondere gleichzeitig, aufgenommen werden kann. In einer bevorzugten Ausgestaltung des in Fig. 6 dargestellten Nadelträgers entspricht ein Füllnadelabstand d1 (d.h. ein Abstand zwischen benachbarten Füllnadeln 20) einem Abstand d2 zwischen benachbarten Vorsprüngen 52. Optional kann auch der Abstand zwischen zwei benachbarten Roboter-Greifern 56, 58 gerade dem Abstand d1 und/oder d2 entsprechen. Es versteht sich von selbst, dass die dargestellte Ausgestaltung des Nadelträgers nicht auf den ersten Nadelträger (d.h. den Transferschleusen-Nadelträger) beschränkt ist, sondern auch eine Ausgestaltung des zweiten und/oder dritten Nadelträgers sein kann.

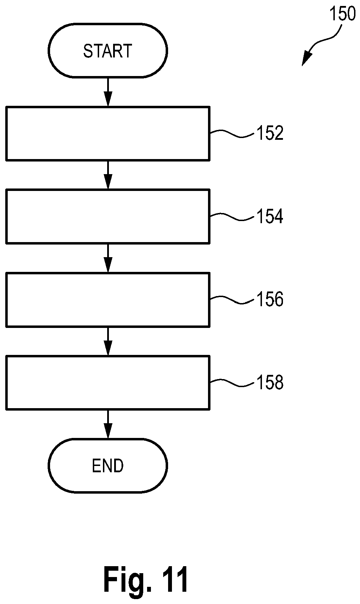

Fig. 11 zeigt eine schematische Darstellung eines Verfahrens 150 gemäß einem vierten Aspekt der Erfindung.

Das Verfahren 150 gemäß dem vierten Aspekt der Erfindung kann komplementär zu dem Verfahren gemäß dem ersten Aspekt der Erfindung ausgeführt werden. Beispielsweise kann das Verfahren gemäß dem vierten Aspekt der Erfindung als Reversion des Verfahrens gemäß dem ersten Aspekt der Erfindung verstanden werden.

Alternativ kann das Verfahren 150 gemäß dem vierten Aspekt der Erfindung jedoch auch unabhängig von dem Verfahren gemäß dem ersten Aspekt der Erfindung ausgeführt werden.

Das Verfahren 150 gemäß dem vierten Aspekt der Erfindung kann in dem zuvor beschriebenen System 10 (siehe Fig. 1 bis Fig. 3) ausgeführt werden.

In einem ersten Schritt 152 des Verfahrens 150 wird der erste Nadelträger 16 bereitgestellt. Der erste Nadelträger 16 ist beispielsweise in der Transferschleuse 14 anordenbar. Wie beispielsweise in der Ausführungsform gemäß Fig. 3 gezeigt, ist der erste Nadelträger 16 auch in der zweiten Position 50 anordenbar.

In einem weiteren Schritt 154 wird der zweite Nadelträger 22 in der ersten Position 24 innerhalb des Isolators 12 bereitgestellt. Der zweite Nadelträger 22 trägt vorzugsweise die Anzahl von Füllnadeln 18.

In einem weiteren Schritt 156 wird zumindest eine Füllnadel 20 der Anzahl von Füllnadeln 18 aus dem zweiten Nadelträger 22 entnommen. Die zumindest eine Füllnadel 20 der Anzahl von Füllnadeln 18 ist während des robotergestützten Entnehmens 108 direkt durch den Roboter-Endeffektor 29, 31 gehalten.

In einem weiteren Schritt 158 wird die zumindest eine Füllnadel 20 der Anzahl von Füllnadeln 18 von dem zweiten Nadelträger 16 zu dem ersten Nadelträger 22 robotergestützt transferiert.

In einem optionalen Schritt kann das Schließen der Transferschleuse 14 robotergestützt, d.h. mittels des Roboter-Endeffektors 29, 31, über die Gegenaufnahme 47 der Tür 46 erfolgen.

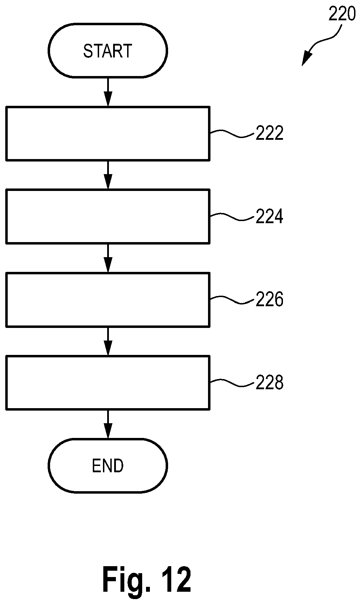

Fig. 12 zeigt eine schematische Darstellung eines Verfahrens 220 gemäß einem vierten Beispiel.

Das Verfahren 220 gemäß dem vierten Beispiel kann komplementär zu dem Verfahren gemäß dem ersten Beispiel ausgeführt werden. Beispielsweise kann das Verfahren gemäß dem vierten Beispiel als Reversion des Verfahrens gemäß dem ersten Beispiel verstanden werden.

Alternativ kann das Verfahren 220 gemäß dem vierten Beispiel jedoch auch unabhängig von dem Verfahren gemäß dem ersten Beispiel ausgeführt werden.

Das Verfahren 220 gemäß dem vierten Beispiel kann in dem zuvor beschriebenen System 10' (siehe Fig. 4) ausgeführt werden.

In einem ersten Schritt 222 wird der Nadelträger 16 in der Füllposition 24 bereitgestellt.

In einem weiteren Schritt 224 wird der Nadelträger 16 über die Aufnahme 52 robotergestützt aufgenommen. Der Nadelträger 16 trägt dabei vorzugsweise die Anzahl von Füllnadeln 18. In einem weiteren Schritt 226 wird der Nadelträger 16 aus der Füllposition 24 in dem Isolator 12 entnommen.

In einem weiteren Schritt 228 wird der Nadelträger 16 mit der Anzahl von Füllnadeln 18 aus der Füllposition transferiert.

In einem optionalen Schritt kann das Schließen der Transferschleuse 14 robotergestützt, d.h. mittels des Roboter-Endeffektors 29, 31, über die Gegenaufnahme 47 der Tür 46 erfolgen.

## Patentansprüche

1. Verfahren (100) zum Transferieren zumindest einer Füllnadel (20) einer Anzahl von Füllnadeln (18) in einen Isolator (12), insbesondere einen aseptischen Isolator (12), der eine Transferschleuse (14) aufweist, wobei das Verfahren (100) die folgenden Schritte aufweist:
Bereitstellen (102) eines ersten Nadelträgers (16) innerhalb der Transferschleuse (14), der die Anzahl von Füllnadeln (18) trägt;
Bereitstellen (104) eines zweiten Nadelträgers (22) in einer ersten Position (24) innerhalb des Isolators (12);
robotergestütztes Transferieren (106) der zumindest einen Füllnadel (20) der Anzahl von Füllnadeln (18) von dem ersten Nadelträger (16) zu dem zweiten Nadelträger (22); und
robotergestütztes Anordnen (108) der zumindest einen Füllnadel (20) der Anzahl von Füllnadeln (18) in dem zweiten Nadelträger (22), wobei die zumindest eine Füllnadel (20) der Anzahl von Füllnadeln (18) während des robotergestützten Anordnens (108) direkt gehalten ist.

2. Verfahren (100) nach Anspruch 1, wobei der zweite Nadelträger (22) in einer Füllstation (26) ist, in der Objekte mittels der zumindest einen Füllnadel (20) der Anzahl von Füllnadeln (18) mit einem Fluid, insbesondere einem pharmazeutischen oder einem kosmetischen Fluid, befüllt werden.

3. Verfahren (100) nach Anspruch 1 oder 2, wobei die zumindest eine Füllnadel (20) der Anzahl von Füllnadeln (18) gesamthaft von dem ersten Nadelträger (16) zu dem zweiten Nadelträger (22) transferiert wird.

4. Verfahren (100) nach Anspruch 1 oder 2, wobei die zumindest eine Füllnadel (20) der Anzahl von Füllnadeln (18) jeweils einzeln von dem ersten Nadelträger (16) zu dem zweiten Nadelträger (22) transferiert wird.

5. Verfahren (100) nach Anspruch 1 oder 2, wobei der Schritt des robotergestützten Transferierens (106) der zumindest einen Füllnadel (20) der Anzahl von Füllnadeln (18) von dem ersten Nadelträger (16) zu dem zweiten Nadelträger (22) die folgenden Schritte aufweist:
erstes robotergestütztes Transferieren (110) der zumindest einen Füllnadel (20) der Anzahl von Füllnadeln (18) von dem ersten Nadelträger (16) zu einem dritten Nadelträger (48), der in einer zweiten Position (50) innerhalb des Isolators (12) angeordnet ist, wobei die zweite Position (50) von der ersten Position (24) beabstandet ist;
robotergestütztes Anordnen (112) der zumindest einen Füllnadel (20) der Anzahl von Füllnadeln (18) in dem dritten Nadelträger (48); und
wobei der Schritt des robotergestützten Anordnens (108) der zumindest einen Füllnadel (20) der Anzahl von Füllnadeln (18) in dem zweiten Nadelträger (22) den folgenden Schritt aufweist:
zweites robotergestütztes Transferieren (114) der zumindest einen Füllnadel (20) der Anzahl von Füllnadeln (18) von dem dritten Nadelträger (48) zu dem zweiten Nadelträger (22), wobei die zumindest eine Füllnadel (20) der Anzahl von Füllnadeln (18) während des zweiten robotergestützten Transferierens (114) direkt gehalten ist.

6. Verfahren (100) nach Anspruch 5, wobei der dritte Nadelträger (48) ein Zwischenträger ist, in dem die zumindest eine Füllnadel (20) getragen wird, bevor sie in den zweiten Nadelträger (22) transferiert wird.

7. Verfahren (100) nach Anspruch 5 oder 6, wobei die zumindest eine Füllnadel (20) der Anzahl von Füllnadeln (18) gesamthaft von dem ersten Nadelträger (16) zu dem dritten Nadelträger (48) transferiert wird.

8. Verfahren (100) nach Anspruch 5 oder 6, wobei die zumindest eine Füllnadel (20) der Anzahl von Füllnadeln (18) jeweils einzeln von dem ersten Nadelträger (16) zu dem dritten Nadelträger (48) transferiert wird.

9. Verfahren (100) nach Anspruch 1 oder 2, wobei der Schritt des robotergestützten Transferierens (106) der zumindest einen Füllnadel (20) der Anzahl von Füllnadeln (18) von dem ersten Nadelträger (16) zu dem zweiten Nadelträger (22) die folgenden Schritte aufweist:
erstes robotergestütztes Transferieren (116) des ersten Nadelträgers (16) mitsamt der Anzahl von Füllnadeln (18) von der Transferschleuse (14) in eine zweite Position (50) innerhalb des Isolators (12), wobei die zweite Position (50) von der ersten Position (22) beabstandet ist;
robotergestütztes Anordnen (118) des ersten Nadelträgers (16) in der zweiten Position (50); und
wobei der Schritt des robotergestützten Anordnens (108) der zumindest einen Füllnadel (20) der Anzahl von Füllnadeln (18) in dem zweiten Nadelträger (22) den folgenden Schritt aufweist:
zweites robotergestütztes Transferieren (120) der zumindest einen Füllnadel (20) der Anzahl von Füllnadeln (18) von dem ersten Nadelträger (16) zu dem zweiten Nadelträger (22), wobei die zumindest eine Füllnadel (20) der Anzahl von Füllnadeln (18) während des zweiten robotergestützten Transferierens (120) direkt gehalten ist.

10. Verfahren (150) zum Transferieren zumindest einer Füllnadel (20) einer Anzahl von Füllnadeln (18) aus einem Isolator (12), insbesondere einem aseptischen Isolator (12), der eine Transferschleuse (14) aufweist, wobei das Verfahren (150) die folgenden Schritte aufweist:
Bereitstellen (152) eines ersten Nadelträgers (16) innerhalb der Transferschleuse (14);
Bereitstellen (154) eines zweiten Nadelträgers (22) in einer ersten Position (24) innerhalb des Isolators (12), der die Anzahl von Füllnadeln (18) trägt;
robotergestütztes Entnehmen (156) der zumindest einen Füllnadel (20) der Anzahl von Füllnadeln (18) aus dem zweiten Nadelträger (22), wobei die zumindest eine Füllnadel (20) der Anzahl von Füllnadeln (18) während des robotergestützten Entnehmens (156) direkt gehalten ist; und
robotergestütztes Transferieren (158) der zumindest einen Füllnadel (20) der Anzahl von Füllnadeln (18) von dem zweiten Nadelträger (16) zu dem ersten Nadelträger (22).

11. Transfersystem (10) zum Transferieren zumindest einer Füllnadel (20) einer Anzahl von Füllnadeln (18) in einen Isolator (12), insbesondere einen aseptischen Isolator (12), wobei das Transfersystem (10) aufweist:
den Isolator (12), der eine Transferschleuse (14) aufweist, wobei innerhalb der Transferschleuse (14) ein erster Nadelträger (16), der die Anzahl von Füllnadeln (18) trägt, bereitgestellt ist, und wobei in einer ersten Position (24) innerhalb des Isolators (12) ein zweiter Nadelträger (22) bereitgestellt ist;
mindestens einen Roboter (28, 30) mit einem Roboter-Endeffektor (29, 31), der innerhalb des Isolators (12) angeordnet ist; und
eine Steuerung (32), die derart ausgebildet ist, dass die folgenden Schritte ausgeführt werden:
robotergestütztes Transferieren (106) der zumindest einen Füllnadel (20) der Anzahl von Füllnadeln (18) von dem ersten Nadelträger (16) zu dem zweiten Nadelträger (22); und
robotergestütztes Anordnen (108) der zumindest einen Füllnadel (20) der Anzahl von Füllnadeln (18) in dem zweiten Nadelträger (22), wobei die zumindest eine Füllnadel (20) der Anzahl von Füllnadeln (18) während des robotergestützten Anordnens (108) direkt durch den Roboter-Endeffektor (29, 31) gehalten ist.

12. Transfersystem (10) zum Transferieren zumindest einer Füllnadel (20) einer Anzahl von Füllnadeln (18) aus einem Isolator (12), insbesondere einem aseptischen Isolator (12), wobei das Transfersystem (10) aufweist:
den Isolator (12), der eine Transferschleuse (14) aufweist, wobei in einer ersten Position (24) innerhalb des Isolators (12) ein zweiter Nadelträger (22) bereitgestellt ist, wobei der zweite Nadelträger (22) die Anzahl von Füllnadeln (18) trägt;
einen ersten Nadelträger (16), der innerhalb der Transferschleuse (14) angeordnet ist;
mindestens einen Roboter (28, 30) mit einem Roboter-Endeffektor (29, 31), der innerhalb des Isolators (12) angeordnet ist; und
eine Steuerung (32), die derart ausgebildet ist, dass die folgenden Schritte ausgeführt werden:
robotergestütztes Entnehmen (156) der zumindest einen Füllnadel (20) der Anzahl von Füllnadeln (18) aus dem zweiten Nadelträger (22), wobei die zumindest eine Füllnadel (20) der Anzahl von Füllnadeln (18) während des robotergestützten Entnehmens (156) direkt durch den Roboter-Endeffektor (29, 31) gehalten ist; und
robotergestütztes Transferieren (158) der zumindest einen Füllnadel (20) der Anzahl von Füllnadeln (18) von dem zweiten Nadelträger (16) zu dem ersten Nadelträger (22).

13. Computerprogramm (34) mit einem Programmcode, der dazu ausgebildet ist, wenn er in der Steuerung (32) des Transfersystems (10) nach Anspruch 11 ausgeführt wird, die folgenden Schritte auszuführen:
robotergestütztes Transferieren (106) der zumindest einen Füllnadel (20) der Anzahl von Füllnadeln (18) von dem ersten Nadelträger (16) zu dem zweiten Nadelträger (22); und
robotergestütztes Anordnen (108) der zumindest einen Füllnadel (20) der Anzahl von Füllnadeln (18) in dem zweiten Nadelträger (22), wobei die zumindest eine Füllnadel (20) der Anzahl von Füllnadeln (18) während des robotergestützten Anordnens (108) direkt gehalten ist.

14. Computerprogramm (34) mit einem Programmcode, der dazu ausgebildet ist, wenn er in der Steuerung des Transfersystems (10) nach Anspruch 12 ausgeführt wird, die folgenden Schritte auszuführen:
robotergestütztes Entnehmen (156) der zumindest einen Füllnadel (20) der Anzahl von Füllnadeln (18) aus dem zweiten Nadelträger (22), wobei die zumindest eine Füllnadel (20) der Anzahl von Füllnadeln (18) während des robotergestützten Entnehmens (108) direkt gehalten ist; und
robotergestütztes Transferieren (158) der zumindest einen Füllnadel (20) der Anzahl von Füllnadeln (18) von dem zweiten Nadelträger (16) zu dem ersten Nadelträger (22).

## Claims

1. A method (100) for transferring at least one filling needle (20) of a number of filling needles (18) into an isolator (12), in particular an aseptic isolator (12), which has a transfer lock (14), the method (100) having the following steps:
Providing (102) of a first needle carrier (16) within the transfer lock (14), said needle carrier carrying the number of filling needles (18);
Providing (104) of a second needle carrier (22) in a first position (24) within the isolator (12);
Robot-assisted transferring (106) of the at least one filling needle (20) of the number of filling needles (18) from the first needle carrier (16) to the second needle carrier (22); and
Robot-assisted placing (108) of the at least one filling needle (20) of the number of filling needles (18) in the second needle carrier (22), wherein the at least one filling needle (20) of the number of filling needles (18) is held directly during the robot-assisted placing (108).

2. The method (100) as claimed in claim 1, wherein the second needle carrier (22) is in a filling station (26) in which objects are filled with a fluid, in particular a pharmaceutical or cosmetic fluid, by means of the at least one filling needle (20) of the number of filling needles (18).

3. The method (100) as claimed in claim 1 or 2, wherein the at least one filling needle (20) of the number of filling needles (18) is transferred collectively from the first needle carrier (16) to the second needle carrier (22).

4. The method (100) as claimed in claim 1 or 2, wherein the at least one filling needle (20) of the number of filling needles (18) is transferred individually from the first needle carrier (16) to the second needle carrier (22).

5. The method (100) as claimed in claim 1 or 2, wherein the step of robot-assisted transferring (106) of the at least one filling needle (20) of the number of filling needles (18) from the first needle carrier (16) to the second needle carrier (22) comprises the following steps:
First robot-assisted transferring (110) of the at least one filling needle (20) of the number of filling needles (18) from the first needle carrier (16) to a third needle carrier (48), which is arranged in a second position (50) within the isolator (12), wherein the second position (50) is spaced apart from the first position (24);
Robot-assisted placing (112) of the at least one filling needle (20) of the number of filling needles (18) in the third needle carrier (48); and
wherein the step of robot-assisted placing (108) of the at least one filling needle (20) of the number of filling needles (18) in the second needle carrier (22) comprises the following step:
Second robot-assisted transferring (114) of the at least one filling needle (20) of the number of filling needles (18) from the third needle carrier (48) to the second needle carrier (22), wherein the at least one filling needle (20) of the number of filling needles (18) is held directly during the second robot-assisted transferring (114).

6. The method (100) as claimed in claim 5, wherein the third needle carrier (48) is an intermediate carrier in which the at least one filling needle (20) is carried before it is transferred to the second needle carrier (22).

7. The method (100) as claimed in claim 5 or 6, wherein the at least one filling needle (20) of the number of filling needles (18) is transferred collectively from the first needle carrier (16) to the third needle carrier (48).

8. The method (100) as claimed in claim 5 or 6, wherein the at least one filling needle (20) of the number of filling needles (18) is transferred individually from the first needle carrier (16) to the third needle carrier (48).

9. The method (100) as claimed in claim 1 or 2, wherein the step of robot-assisted transferring (106) of the at least one filling needle (20) of the number of filling needles (18) from the first needle carrier (16) to the second needle carrier (22) comprises the following steps:
First robot-assisted transferring (116) of the first needle carrier (16) together with the number of filling needles (18) from the transfer lock (14) to a second position (50) within the isolator (12), the second position (50) being spaced apart from the first position (22);
Robot-assisted placing (118) of the first needle carrier (16) in the second position (50); and
wherein the step of robot-assisted placing (108) of the at least one filling needle (20) of the number of filling needles (18) in the second needle carrier (22) comprises the following step:
Second robot-assisted transferring (120) of the at least one filling needle (20) of the number of filling needles (18) from the first needle carrier (16) to the second needle carrier (22), wherein the at least one filling needle (20) of the number of filling needles (18) is held directly during the second robot-assisted transferring (120).

10. A method (150) for transferring at least one filling needle (20) of a number of filling needles (18) from an isolator (12), in particular an aseptic isolator (12), which has a transfer lock (14), the method (150 ) comprising the following steps:
Providing (152) of a first needle carrier (16) within the transfer lock (14);
Providing (154) of a second needle carrier (22), which carries the number of filling needles (18), in a first position (24) within the isolator (12);
Robot-assisted removing (156) of the at least one filling needle (20) of the number of filling needles (18) from the second needle carrier (22), the at least one filling needle (20) of the number of filling needles (18) being held directly during the robot-assisted removing (156); and
robot-assisted transferring (158) of the at least one filling needle (20) of the number of filling needles (18) from the second needle carrier (16) to the first needle carrier (22).

11. A transfer system (10) for transferring at least one filling needle (20) of a number of filling needles (18) into an isolator (12), in particular an aseptic isolator (12), the transfer system (10) comprising:
the isolator (12), which has a transfer lock (14), wherein a first needle carrier (16), which carries the number of filling needles (18), is provided within the transfer lock (14), and wherein a second needle carrier (22) is provided in a first position (24) within the isolator (12);
at least one robot (28, 30) with a robot end effector (29, 31) which is arranged within the isolator (12); and
a controller (32) which is configured in such a way that the following steps are carried out:
Robot-assisted transferring (106) of the at least one filling needle (20) of the number of filling needles (18) from the first needle carrier (16) to the second needle carrier (22); and
Robot-assisted placing (108) of the at least one filling needle (20) of the number of filling needles (18) in the second needle carrier (22), wherein the at least one filling needle (20) of the number of filling needles (18) is held directly by the robot end effector (29, 31) during the robot-assisted placing (108).

12. A transfer system (10) for transferring at least one filling needle (20) of a number of filling needles (18) from an isolator (12), in particular an aseptic isolator (12), the transfer system (10) having:
the isolator (12), which has a transfer lock (14), wherein a second needle carrier (22) is provided in a first position (24) within the isolator (12), the second needle carrier (22) carrying the number of filling needles (18);
a first needle carrier (16) which is provided within the transfer lock (14);
at least one robot (28, 30) with a robot end effector (29, 31) which is arranged within the isolator (12); and
a controller (32) which is configured in such a way that the following steps are carried out:
Robot-assisted removing (156) of the at least one filling needle (20) of the number of filling needles (18) from the second needle carrier (22), wherein the at least one filling needle (20) of the number of filling needles (18) is held directly by the robot end effector (29, 31) during the robot-assisted removing (156 ); and
Robot-assisted transferring (158) of the at least one filling needle (20) of the number of filling needles (18) from the second needle carrier (16) to the first needle carrier (22).

13. A computer program (34) with a program code which is configured, when executed in the controller (32) of the transfer system (10) as claimed in claim 11, to carry out the following steps:
Robot-assisted transferring (106) of the at least one filling needle (20) of the number of filling needles (18) from the first needle carrier (16) to the second needle carrier (22); and
Robot-assisted placing (108) of the at least one filling needle (20) of the number of filling needles (18) in the second needle carrier (22), wherein the at least one filling needle (20) of the number of filling needles (18) is held directly during the robot-assisted placing (108).

14. A computer program (34) with a program code which is configured, when executed in the controller of the transfer system (10) as claimed in claim 12, to carry out the following steps:
Robot-assisted removing (156) of the at least one filling needle (20) of the number of filling needles (18) from the second needle carrier (22), wherein the at least one filling needle (20) of the number of filling needles (18) is held directly during the robot-assisted removing (108); and
Robot-assisted transferring (158) of the at least one filling needle (20) of the number of filling needles (18) from the second needle carrier (16) to the first needle carrier (22).

## Revendications

1. Procédé (100) permettant de transférer au moins une aiguille de remplissage (20) d'un certain nombre d'aiguilles de remplissage (18) dans un isolateur (12), en particulier un isolateur aseptique (12), qui présente un sas de transfert (14), dans lequel le procédé (100) présente les étapes suivantes :
fourniture (102) d'un premier support pour aiguilles (16) à l'intérieur du sas de transfert (14), lequel premier support pour aiguilles supporte le certain nombre d'aiguilles de remplissage (18) ;
fourniture (104) d'un deuxième support pour aiguilles (22) dans une première position (24) à l'intérieur de l'isolateur (12) ;
transfert robotisé (106) de l'au moins une aiguille de remplissage (20) du certain nombre d'aiguilles de remplissage (18) du premier support pour aiguilles (16) au deuxième support pour aiguilles (22) ; et
disposition robotisée (108) de l'au moins une aiguille de remplissage (20) du certain nombre d'aiguilles de remplissage (18) dans le deuxième support pour aiguilles (22), dans lequel l'au moins une aiguille de remplissage (20) du certain nombre d'aiguilles de remplissage (18) est directement maintenue pendant la disposition robotisée (108).

2. Procédé (100) selon la revendication 1, dans lequel le deuxième support pour aiguilles (22) est dans une station de remplissage (26) dans laquelle des objets sont remplis d'un fluide, en particulier d'un fluide pharmaceutique ou d'un fluide cosmétique, au moyen de l'au moins une aiguille de remplissage (20) du certain nombre d'aiguilles de remplissage (18).

3. Procédé (100) selon la revendication 1 ou 2, dans lequel l'au moins une aiguille de remplissage (20) du certain nombre d'aiguilles de remplissage (18) est transférée en totalité du premier support pour aiguilles (16) au deuxième support pour aiguilles (22).

4. Procédé (100) selon la revendication 1 ou 2, dans lequel l'au moins une aiguille de remplissage (20) du certain nombre d'aiguilles de remplissage (18) est transférée respectivement individuellement du premier support pour aiguilles (16) au deuxième support pour aiguilles (22).

5. Procédé (100) selon la revendication 1 ou 2, dans lequel l'étape de transfert robotisé (106) de l'au moins une aiguille de remplissage (20) du certain nombre d'aiguilles de remplissage (18) du premier support pour aiguilles (16) au deuxième support pour aiguilles (22) présente les étapes suivantes :
premier transfert robotisé (110) de l'au moins une aiguille de remplissage (20) du certain nombre d'aiguilles de remplissage (18) du premier support pour aiguilles (16) à un troisième support pour aiguilles (48) qui est disposé dans une seconde position (50) à l'intérieur de l'isolateur (12), dans lequel la seconde position (50) est espacée de la première position (24) ;
disposition robotisée (112) de l'au moins une aiguille de remplissage (20) du certain nombre d'aiguilles de remplissage (18) dans le troisième support pour aiguilles (48) ; et
dans lequel l'étape de disposition robotisée (108) de l'au moins une aiguille de remplissage (20) du certain nombre d'aiguilles de remplissage (18) dans le deuxième support pour aiguilles (22) présente l'étape suivante :
second transfert robotisé (114) de l'au moins une aiguille de remplissage (20) du certain nombre d'aiguilles de remplissage (18) du troisième support pour aiguilles (48) au deuxième support pour aiguilles (22), dans lequel l'au moins une aiguille de remplissage (20) du certain nombre d'aiguilles de remplissage (18) est directement maintenue pendant le second transfert robotisé (114).

6. Procédé (100) selon la revendication 5, dans lequel le troisième support pour aiguilles (48) est un support intermédiaire dans lequel l'au moins une aiguille de remplissage (20) est supportée avant d'être transférée dans le deuxième support pour aiguilles (22).

7. Procédé (100) selon la revendication 5 ou 6, dans lequel l'au moins une aiguille de remplissage (20) du certain nombre d'aiguilles de remplissage (18) est transférée en totalité du premier support pour aiguilles (16) au troisième support pour aiguilles (48).

8. Procédé (100) selon la revendication 5 ou 6, dans lequel l'au moins une aiguille de remplissage (20) du certain nombre d'aiguilles de remplissage (18) est transférée respectivement individuellement du premier support pour aiguilles (16) au troisième support pour aiguilles (48).

9. Procédé (100) selon la revendication 1 ou 2, dans lequel l'étape de transfert robotisé (106) de l'au moins une aiguille de remplissage (20) du certain nombre d'aiguilles de remplissage (18) du premier support pour aiguilles (16) au deuxième support pour aiguilles (22) présente les étapes suivantes :
premier transfert robotisé (116) du premier support pour aiguilles (16) avec le certain nombre d'aiguilles de remplissage (18) du sas de transfert (14) à une seconde position (50) à l'intérieur de l'isolateur (12), dans lequel la seconde position (50) est espacée de la première position (22) ;
disposition robotisée (118) du premier support pour aiguilles (16) dans la seconde position (50) ; et
dans lequel l'étape de disposition robotisée (108) de l'au moins une aiguille de remplissage (20) du certain nombre d'aiguilles de remplissage (18) dans le deuxième support pour aiguilles (22) présente l'étape suivante :
second transfert robotisé (120) de l'au moins une aiguille de remplissage (20) du certain nombre d'aiguilles de remplissage (18) du premier support pour aiguilles (16) au deuxième support pour aiguilles (22), dans lequel l'au moins une aiguille de remplissage (20) du certain nombre d'aiguilles de remplissage (18) est directement maintenue pendant le second transfert robotisé (120).

10. Procédé (150) permettant de transférer au moins une aiguille de remplissage (20) d'un certain nombre d'aiguilles de remplissage (18) hors d'un isolateur (12), en particulier d'un isolateur aseptique (12), qui présente un sas de transfert (14), dans lequel le procédé (150) présente les étapes suivantes :
fourniture (152) d'un premier support pour aiguilles (16) à l'intérieur du sas de transfert (14) ;
fourniture (154) d'un deuxième support pour aiguilles (22) dans une première position (24) à l'intérieur de l'isolateur (12), lequel deuxième support pour aiguilles supporte le certain nombre d'aiguilles de remplissage (18) ;
extraction robotisée (156) de l'au moins une aiguille de remplissage (20) du certain nombre d'aiguilles de remplissage (18) hors du deuxième support pour aiguilles (22), dans lequel l'au moins une aiguille de remplissage (20) du certain nombre d'aiguilles de remplissage (18) est directement maintenue pendant l'extraction robotisée (156) ; et
transfert robotisé (158) de l'au moins une aiguille de remplissage (20) du certain nombre d'aiguilles de remplissage (18) du deuxième support pour aiguilles (16) au premier support pour aiguilles (22).

11. Système de transfert (10) permettant de transférer au moins une aiguille de remplissage (20) d'un certain nombre d'aiguilles de remplissage (18) dans un isolateur (12), en particulier un isolateur aseptique (12), dans lequel le système de transfert (10) présente :
l'isolateur (12) qui présente un sas de transfert (14), dans lequel un premier support pour aiguilles (16) qui supporte le certain nombre d'aiguilles de remplissage (18) est fourni à l'intérieur du sas de transfert (14), et dans lequel un deuxième support pour aiguilles (22) est fourni dans une première position (24) à l'intérieur de l'isolateur (12) ;
au moins un robot (28, 30) comportant un organe effecteur de robot (29, 31) qui est disposé à l'intérieur de l'isolateur (12) ; et
une commande (32) qui est configurée de telle sorte que les étapes suivantes sont exécutées :
transfert robotisé (106) de l'au moins une aiguille de remplissage (20) du certain nombre d'aiguilles de remplissage (18) du premier support pour aiguilles (16) au deuxième support pour aiguilles (22) ; et
disposition robotisée (108) de l'au moins une aiguille de remplissage (20) du certain nombre d'aiguilles de remplissage (18) dans le deuxième support pour aiguilles (22), dans lequel l'au moins une aiguille de remplissage (20) du certain nombre d'aiguilles de remplissage (18) est directement maintenue par l'organe effecteur de robot (29, 31) pendant la disposition robotisée (108).

12. Système de transfert (10) permettant de transférer au moins une aiguille de remplissage (20) d'un certain nombre d'aiguilles de remplissage (18) hors d'un isolateur (12), en particulier d'un isolateur aseptique (12), dans lequel le système de transfert (10) présente :
l'isolateur (12) qui présente un sas de transfert (14), dans lequel un deuxième support pour aiguilles (22) est fourni dans une première position (24) à l'intérieur de l'isolateur (12), dans lequel le deuxième support pour aiguilles (22) supporte le certain nombre d'aiguilles de remplissage (18) ;
un premier support pour aiguilles (16) qui est disposé à l'intérieur du sas de transfert (14) ;
au moins un robot (28, 30) comportant un organe effecteur de robot (29, 31) qui est disposé à l'intérieur de l'isolateur (12) ; et
une commande (32) qui est configurée de telle sorte que les étapes suivantes sont exécutées :
extraction robotisée (156) de l'au moins une aiguille de remplissage (20) du certain nombre d'aiguilles de remplissage (18) hors du deuxième support pour aiguilles (22), dans lequel l'au moins une aiguille de remplissage (20) du certain nombre d'aiguilles de remplissage (18) est directement maintenue par l'organe effecteur de robot (29, 31) pendant l'extraction robotisée (156) ; et
transfert robotisé (158) de l'au moins une aiguille de remplissage (20) du certain nombre d'aiguilles de remplissage (18) du deuxième support pour aiguilles (16) au premier support pour aiguilles (22).

13. Programme informatique (34) comportant un code de programme qui est configuré pour exécuter, lorsqu'il est exécuté dans la commande (32) du système de transfert (10) selon la revendication 11, les étapes suivantes :
transfert robotisé (106) de l'au moins une aiguille de remplissage (20) du certain nombre d'aiguilles de remplissage (18) du premier support pour aiguilles (16) au deuxième support pour aiguilles (22) ; et
disposition robotisée (108) de l'au moins une aiguille de remplissage (20) du certain nombre d'aiguilles de remplissage (18) dans le deuxième support pour aiguilles (22), dans lequel l'au moins une aiguille de remplissage (20) du certain nombre d'aiguilles de remplissage (18) est directement maintenue pendant la disposition robotisée (108).

14. Programme informatique (34) comportant un code de programme qui est configuré pour exécuter, lorsqu'il est exécuté dans la commande du système de transfert (10) selon la revendication 12, les étapes suivantes :
extraction robotisée (156) de l'au moins une aiguille de remplissage (20) du certain nombre d'aiguilles de remplissage (18) hors du deuxième support pour aiguilles (22), dans lequel l'au moins une aiguille de remplissage (20) du certain nombre d'aiguilles de remplissage (18) est directement maintenue pendant l'extraction robotisée (108) ; et
transfert robotisé (158) de l'au moins une aiguille de remplissage (20) du certain nombre d'aiguilles de remplissage (18) du deuxième support pour aiguilles (16) au premier support pour aiguilles (22).
